# EUROPEAN PATENT SPECIFICATION

(11) **EP 3 982 243 B1**
(45) Date of publication and mention of the grant of the patent: **02.04.2025**
(21) Application number: 21180029.7
(22) Date of filing: 17.06.2021
(51) Int. Cl.: G06F 3/06, G06F 13/16

(54) **MEMORY SYSTEM, ELECTRONIC DEVICE INCLUDING THE SAME, AND MEMORY CONTROLLER**
SPEICHERSYSTEM, ELEKTRONISCHE VORRICHTUNG DAMIT UND SPEICHERSTEUERUNG
SYSTÈME DE MÉMOIRE, DISPOSITIF ÉLECTRONIQUE LE COMPRENANT ET CONTRÔLEUR DE MÉMOIRE

(30) Priority: 08.10.2020 KR 20200130278
(43) Date of publication of application: 13.04.2022
(73) Proprietor: Samsung Electronics Co., Ltd., Suwon-si, Gyeonggi-do 16677 (KR)
(72) Inventor: JANG, Seongyong, 16677 Suwon-si, Gyeonggi-do (KR); SEO, Sungho, 16677 Suwon-si, Gyeonggi-do (KR); SHIN, Myungsub, 16677 Suwon-si, Gyeonggi-do (KR); YOO, Kyungphil, 16677 Suwon-si, Gyeonggi-do (KR); LEE, Youngmin, 16677 Suwon-si, Gyeonggi-do (KR); JUNG, Haesung, 16677 Suwon-si, Gyeonggi-do (KR)
(74) Representative: Kuhnen & Wacker Patent- und Rechtsanwaltsbüro PartG mbB

(56) References cited:
- US-A1- 2020 285 413

## Description

### BACKGROUND

The present disclosure relates to a memory system, an electronic device including the same, and a memory controller.

A non-volatile memory device can retain data even when power is turned off, and may be applied as storage media to various electronic devices. Recently, various types of memory systems including a non-volatile memory device, such as an embedded multimedia card (eMMC), a Universal Flash Storage (UFS), a solid state drive (SSD), and the like, have been developed. A memory system may be connected to a host such as an electronic device and may store, output, or delete data according to a command transmitted from the host. In order to improve performance of the memory system, it is necessary to improve performance in transmitting data between the host and the memory system.

US 2020/0285413 A1 discloses a memory controller that controls a nonvolatile memory in response to commands from a host, includes a normal transfer queue and a priority transfer queue, a transfer packet priority determination unit, a transfer queue selector, and a transfer packet selector. The transfer packet priority determination unit determines whether a transfer packet is a priority packet based on transmission information of the transfer packet. The transfer queue selector selects the priority transfer queue and stores the transfer packet in the priority transfer queue when the transfer packet is determined as the priority packet, and selects the normal transfer queue and stores the transfer packet in the normal transfer queue when the transfer packet is not determined as the priority packet. The transfer packet selector transfers to a host a priority packet stored in the priority transfer queue preferentially with respect to a normal packet stored in the normal transfer queue.

### SUMMARY

An aspect of the present disclosure is a memory system capable of improving performance in transmitting data between a host and the memory system by dividing a message UPIU into a plurality of sub-data packets, when a message UPIU is waiting to be transmitted from the memory system to the host, and transmitting the message UPIU to the host between the plurality of sub-data packets.

The present invention is defined by the independent claim. Specific embodiments are defined by the dependent claims.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a diagram schematically illustrating an electronic device including a memory system according to an embodiment of the present disclosure.
FIGS. 2A to 2C are diagrams schematically illustrating a memory device according to an embodiment of the present disclosure.
FIG. 3 is a block diagram schematically illustrating a memory system according to an embodiment of the present disclosure.
FIG. 4 is a flowchart illustrating an operation of a memory system according to an embodiment of the present disclosure.
FIG. 5 is a diagram illustrating an operation of an electronic device including a memory system according to an embodiment of the present disclosure.
FIGS. 6 to 11 are diagrams illustrating an operation of a memory system according to an embodiment of the present disclosure.
FIGS. 12 and 13 are diagrams illustrating an operation of a memory controller according to an embodiment of the present disclosure.
FIGS. 14 to 19 are diagrams illustrating an operation of a memory system according to an embodiment of the present disclosure.
FIGS. 20 and 21 are diagrams illustrating an operation of a memory system according to an embodiment of the present disclosure.
FIG. 22 is a flowchart illustrating an operation of a memory system according to an embodiment of the present disclosure.
FIG. 23 is a diagram illustrating an operation of an electronic device including a memory system according to an embodiment of the present disclosure.
FIGS. 24 to 30 are diagrams illustrating an operation of a memory system according to an embodiment of the present disclosure.
FIGS. 31 and 32 are diagrams illustrating a memory device applicable to a memory system according to an embodiment of the present disclosure.

### DETAILED DESCRIPTION

Hereinafter, embodiments of the present disclosure will be described with reference to the accompanying drawings.

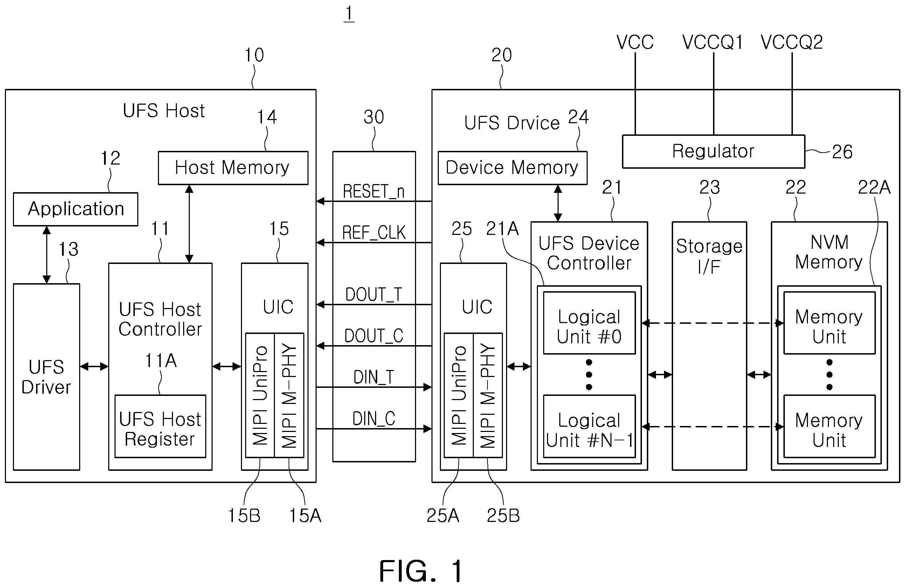

FIG. 1 is a diagram schematically illustrating an electronic device including a memory system according to an embodiment of the present disclosure.

A memory system 1 described with reference to FIG. 1 may be a system conforming to the Universal Flash Storage (UFS) standard announced by the Joint Electron Device Engineering Council (JEDEC), and may include a UFS host 10, a UFS device 20, a UFS interface 30, and the like. Referring to FIG. 1, the UFS host 10 and the UFS device 20 may be connected to each other through the UFS interface 30. For example, the UFS host 10 may be implemented as a portion of an application processor (AP), a central processing unit (CPU), or the like.

The UFS host 10 may include a UFS host controller 11, an application 12, a UFS driver 13, a host memory 14, a UFS interconnect (UIC) layer 15, and the like. The UFS device 20 may include a UFS device controller 21, a non-volatile memory 22, a storage interface 23, a device memory 24, a UIC layer 25, a regulator 26, and the like. The nonvolatile memory 22 may include a plurality of memory units 22A, and the memory unit 22A may include a 2D structure flash memory or a 3D structure flash memory. According to embodiments, the memory unit 22A may include other types of non-volatile memory such as PRAM and/or RRAM, or the like. The UFS device controller 21 and the nonvolatile memory 22 may be connected to each other through the storage interface 23. The storage interface 23 may be configured to conform to standard protocols such as Toggle or ONFI.

The application 12 may refer to a program that wants to communicate with the UFS device 20 to use functions of the UFS device 20. The application 12 may transmit an input-output request (IOR) to the UFS driver 13 for input/output to the UFS device 20. The input/output request (IOR) may refer to a data read request, a data write request, and/or a data discard request, or the like, but is not limited thereto.

The UFS driver 13 may manage the UFS host controller 11 through a UFS-host controller interface (UFS-HCI). The UFS driver 13 may convert the input/output request generated by the application 12 into a UFS command defined by the UFS standard and transmit the converted UFS command to the UFS host controller 11. One input/output request may be converted into a plurality of UFS commands. Although the UFS command may basically be defined by a SCSI standard, the UFS command may also be a UFS standard-only command.

The UFS host controller 11 may transmit the UFS command converted by the UFS driver 13 to the UIC layer 25 of the UFS device 20 through the UIC layer 15 and the UFS interface 30. In this process, a UFS host register 11A of the UFS host controller 11 may serve as a command queue (CQ).

The UIC layer 15 in the UFS host 10 may include MIPI M-PHY 15A and MIPI UniPro 15B, and the UIC layer 25 in the UFS device 20 may also include MIPI M-PHY 25B and MIPI UniPro 25A.

The UFS interface 30 may include a line transmitting a reference clock signal REF_CLK, a line transmitting a hardware reset signal RESET_n for the UFS device 20, a pair of lines transmitting a pair of differential input signals DIN_T and DIN_C, and a pair of lines transmitting a pair of differential output signals DOUT _T and DOUT_C.

A frequency value of a reference clock signal REF_CLK provided from the UFS host 10 to the UFS device 20 may be one of four values of 19.2 MHz, 26 MHz, 38.4 MHz, and 52 MHz, but is not limited thereto. The UFS host 10 may change the frequency value of the reference clock signal REF_CLK during an operation, e.g., during data transmission/reception operations between the UFS host 10 and the UFS device 20. The UFS device 20 may generate clock signals of various frequency values from a reference clock signal REF_CLK provided from the UFS host 10 using a phase-locked loop (PLL) or the like. In addition, the UFS host 10 may set a data rate value between the UFS host 10 and the UFS device 20 by the frequency value of the reference clock signal REF_CLK. For example, the data rate value may be determined depending on the frequency value of the reference clock signal REF_CLK.

The UFS interface 30 may support a plurality of lanes, each of which may be implemented as a pair of differential lines. For example, the UFS interface 30 may include at least one receiving lane and at least one transmission lane. In FIG. 1, a pair of lines configured to transmit the pair of differential input signals DIN_T and DIN_C may constitute the receiving lane, and a pair of lines configured to transmit the pair of differential output signals DOUT_T and DOUT_C may constitute the transmission lane. Although one (1) transmission lane and one (1) receiving lane are illustrated in FIG. 1, the number of transmission lanes and the number of receiving lanes may be changed.

The receiving lane and the transmission lane may transmit data based on a serial communication scheme. Full-duplex communications between the UFS host 10 and the UFS device 20 may be enabled due to a structure in which the receiving lane is separated from the transmission lane. For example, while receiving data from the UFS host 10 through the receiving lane, the UFS device 20 may transmit data to the UFS host 10 through the transmission lane. In addition, control data such as a command from the UFS host 10 to the UFS device 20, and user data to be stored in or read from the non-volatile memory 22 of the UFS device 20 by the UFS host 10 may be transmitted through the same lane. Accordingly, between the UFS host 10 and the UFS device 20, there may be no need to further provide a separate lane for data transmission in addition to the pair of receiving lanes and the pair of transmission lanes.

The UFS device controller 21 of the UFS device 20 may control all operations of the UFS device 20. The UFS device controller 21 may manage the non-volatile memory 22 by a logic unit (LU) 21A, which may be a logical data storage unit. The number of LUs 21A may be eight (8), but is not limited thereto. The UFS device controller 21 may include a flash translation layer (FTL) and may convert a logical data address (e.g., a logic block address (LBA)) received from the UFS host 10 into a physical data address (e.g., a physical block address (PBA)) by using address mapping information of the FTL. A logic block configured to store user data in the UFS system 1 may have a size in a predetermined range. For example, a minimum size of the logic block may be set to 4 KB.

When a command from the UFS host 10 is applied through the UIC layer 25 to the UFS device 20, the UFS device controller 21 may perform an operation in response to the command and may transmit a completion response to the UFS host 10, when the operation is completed.

As an example, when the UFS host 10 intends to store user data in the UFS device 20, the UFS host 10 may transmit a data storage command to the UFS device 20. When a response (i.e., a 'Ready-To-Transfer' response) indicating that the UFS host 10 is ready to receive user data (i.e., Ready-To-Transfer) is received from the UFS device 20, the UFS host 10 may transmit user data to the UFS device 20. The UFS device controller 21 may temporarily store the received user data in the device memory 24 and may store the user data, temporarily stored in the device memory 24, at a selected position of the nonvolatile memory 22 based on the address mapping information of the FTL.

As another example, when the UFS host 10 intends to read the user data stored in the UFS device 20, the UFS host 10 may transmit a data read command to the UFS device 20. The UFS device controller 21, which has received the command, may read the user data from the non-volatile memory 22 based on the data read command and temporarily store the read user data in the device memory 24. During the read operation, the UFS device controller 21 may detect and correct an error in the read user data by using an error correction code (ECC) engine or the like, embedded therein. More specifically, the ECC engine may generate parity bits for write data to be written to the non-volatile memory 22 and the generated parity bits may be stored in the non-volatile memory 22 along with the write data. During the reading of data from the non-volatile memory 22, the ECC engine may correct an error in read data by using the parity bits read from the non-volatile memory 22 along with the read data and output error-corrected read data.

The UFS device controller 21 may transmit user data, temporarily stored in the device memory 24, to the UFS host 10. In addition, the UFS device controller 21 may further include an advanced encryption standard (AES) engine. The AES engine may perform at least an encryption operation and a decryption operation on data transmitted to the UFS device controller 21 by using a symmetric-key algorithm

The UFS host 10 may sequentially store commands, to be transmitted to the UFS device 20, in the UFS host register 11A, which may serve as a command queue, and may sequentially transmit the commands to the UFS device 20. In this case, even while a previously transmitted command is still being processed by the UFS device 20, e.g., even before receiving a notification that the previously transmitted command has been processed by the UFS device 20, the UFS host 10 may transmit a subsequent command on standby in the command queue to the UFS device 20. Thus, the UFS device 20 may also receive a subsequent command from the UFS host 10 during the processing of the previously transmitted command. A maximum number (or queue depth) of commands that may be stored in the command queue may be, for example, 32. Also, the command queue may be implemented as a circular queue in which a start and an end of a command line stored in a queue are indicated by a head pointer and a tail pointer.

Each of the plurality of memory units 22A may include a cell region and a peripheral circuit region (not illustrated) for controlling an operation of the cell region. The cell region may include a 2D memory cell array or a 3D memory cell array. The memory cell array may include a plurality of memory cells. Although each of the memory cells is a single-level cell (SLC) configured to store 1-bit information, each of the memory cells may be a cell configured to store information of 2 bits or more, such as a multi-level cell (MLC), a triple-level cell (TLC), and a quadruple-level cell (QLC). The 3D memory cell array may include a vertical NAND string in which at least one memory cell is vertically oriented and located on another memory cell.

Voltages VCC, VCCQ1, and VCCQ2 may be applied as power supply voltages to the UFS device 20. The voltage VCC may be a main power supply voltage for the UFS device 20 and be in a range of 2.4 V to 3.6 V. The voltage VCCQ1 may be a power supply voltage for supplying a low voltage mainly to the UFS device controller 21 and be in a range of 1.14 V to 1.26 V. The voltage VCCQ2 may be a power supply voltage for supplying a voltage, lower than the voltage VCC and higher than the voltage VCCQ1, mainly to an I/O interface, such as the MIPI M-PHY 25B, and be in a range of 1.7 V to 1.95 V. The power supply voltages may be supplied to respective components of the UFS device 20 through the regulator 26. The regulator 26 may be implemented as a set of unit regulators respectively connected to different ones of the power supply voltages described above.

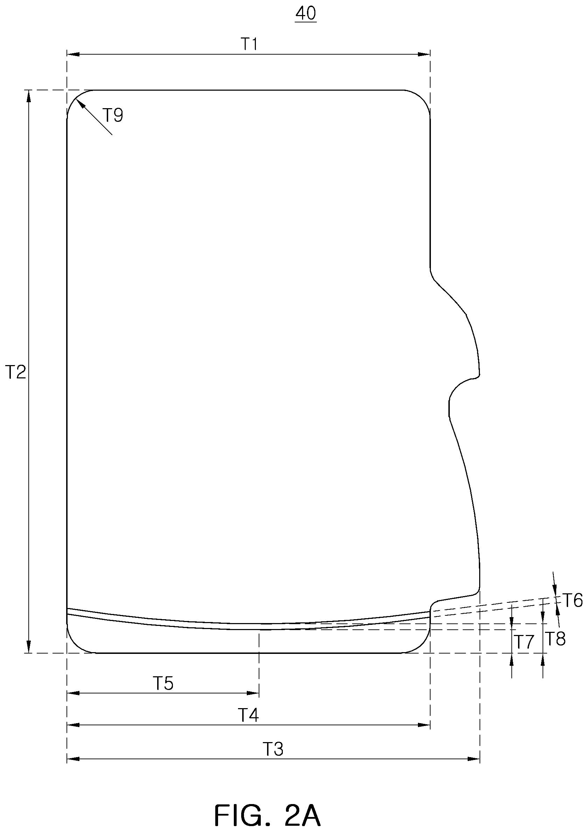

FIGS. 2A to 2C are diagrams schematically illustrating a memory device according to an embodiment of the present disclosure.

FIGS. 2A to 2C are diagrams of a form factor of a UFS card 40. When the UFS device 20 described with reference to FIG. 1 is implemented as the UFS card 40, an outer appearance of the UFS card 40 may be as illustrated in FIGS. 2A to 2C.

FIG. 2A illustrates a top view of the UFS card 40. Referring to FIG. 2A, it can be seen that the UFS card 40 entirely follows a shark-shaped design. In FIG. 2A, the UFS card 40 may have dimensions illustrated in Table 1 below as an example.

**[Table 1]**

| **Item** | **Dimension (mm)** |
|---|---|
| T1 | 9.70 |
| T2 | 15.00 |
| T3 | 11.00 |
| T4 | 9.70 |
| T5 | 5.15 |
| T6 | 0.25 |
| T7 | 0.60 |
| T8 | 0.75 |
| T9 | R0.80 |

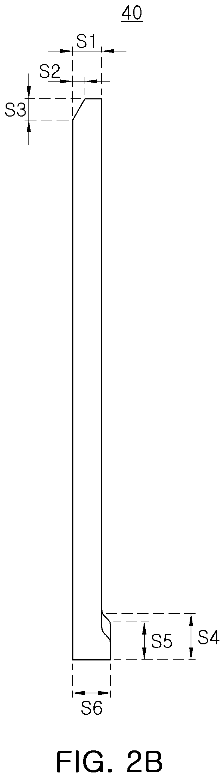

FIG. 2B illustrates a side view of the UFS card 40. In FIG. 2B, the UFS card 40 may have dimensions illustrated in Table 2 below as an example.

**[Table 2]**

| **Item** | **Dimension (mm)** |
|---|---|
| S1 | 0.74±0.06 |
| S2 | 0.30 |
| S3 | 0.52 |
| S4 | 1.20 |
| S5 | 1.05 |
| S6 | 1.00 |

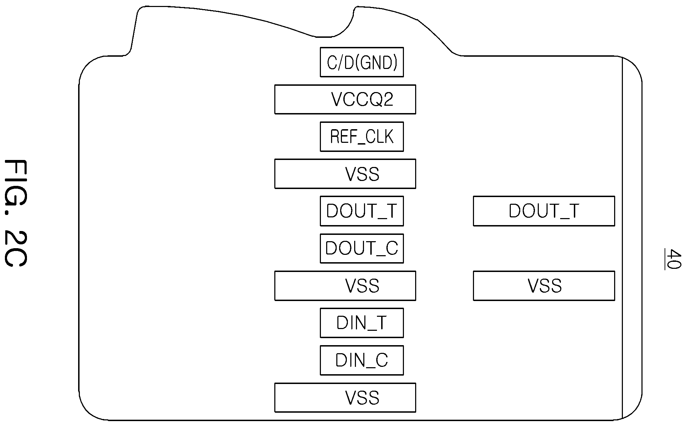

FIG. 2C illustrates a bottom view of the UFS card 40. Referring to FIG. 2C, a plurality of pins for electrical contact with a UFS slot may be formed on a bottom surface of the UFS card 40. Functions of each of the pins will be described below. Based on symmetry between a top surface and the bottom surface of the UFS card 40, some pieces (e.g., T1 to T5 and T9) of information about the dimensions described with reference to FIG. 2A and Table 1 may also be applied to the bottom view of the UFS card 40, illustrated in FIG. 2C.

A plurality of pins for an electrical connection with a UFS host may be formed on the bottom surface of the UFS card 40. Referring to FIG. 2C, a total number of pins may be twelve (12). Each of the pins may have a rectangular shape, and signal names corresponding to the pins may be as illustrated in FIG. 2C. Specific information about each of the pins will be understood with reference to Table 3 below and the above description presented with reference to FIG. 2a.

**[Table 3]**

| **No.** | **Signal Name** | **Description** | **Dimension (mm)** |
|---|---|---|---|
| 1 | Vss | Ground (GND) | 3.00 × 0.72±0.05 |
| 2 | DIN_C | Differential input signals input from a host to the UFS card 40 (DIN_C is a negative node, and DIN_T is a positive node) | 1.50 × 0.72±0.05 |
| 3 | DIN_T | | |
| 4 | Vss | Ground (GND) | 3.00 × 0.72±0.05 |
| 5 | DOUT_C | Differential output signals output from the UFS card 40 to the host (DOUT_C is a negative node, and DOUT_T is a positive node) | 1.50 × 0.72±0.05 |
| 6 | DOUT_T | | |
| 7 | Vss | Ground (GND) | 3.00 × 0.72±0.05 |
| 8 | REF_CLK | Reference clock signal provided from the host to the UFS card 40 | 1.50 × 0.72±0.05 |
| 9 | VCCQ2 | Power supply voltage provided mainly to a PHY interface or a controller and having a lower value than voltage Vcc | 3.00 × 0.72±0.05 |
| 10 | C/D(GND) | Card detection signal | 1.50 × 0.72±0.05 |
| 11 | Vss | Ground (GND) | 3.00 × 0.80±0.05 |
| 12 | Vcc | Main power supply voltage | |

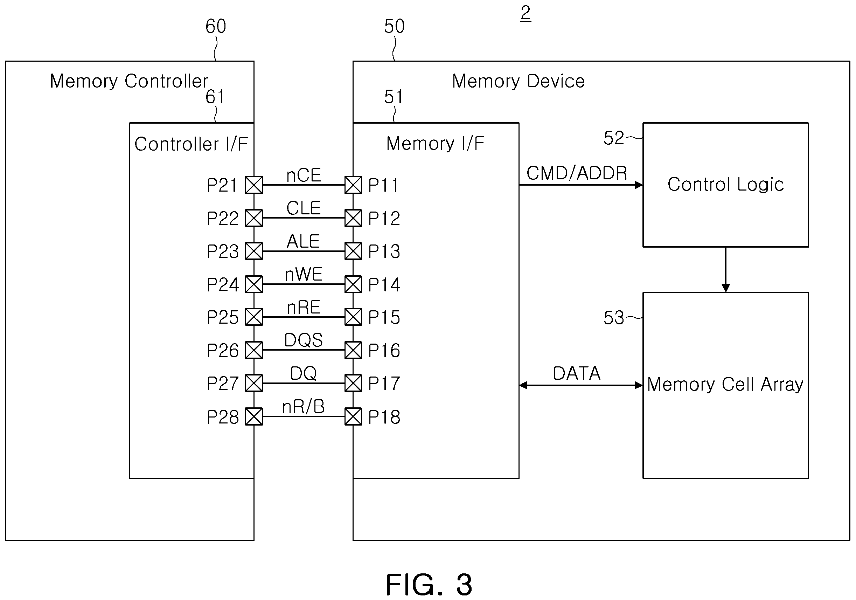

FIG. 3 is a block diagram schematically illustrating a memory system according to an embodiment of the present disclosure.

Referring to FIG. 3, a memory system 2 may include a memory device 50 and a memory controller 60. The memory device 50 may include first to eighth pins P11 to P18, a memory interface circuitry 51, a control logic circuitry 52, a memory cell array 53, and the like.

The memory interface circuit 51 may receive a chip enable signal nCE from the memory controller 60 through the first pin P11. The memory interface circuitry 51 may transmit and receive signals to and from the memory controller 60 through the second to eighth pins P12 to P18 in response to the chip enable signal nCE. For example, when the chip enable signal nCE is in an enable state (e.g., a low level), the memory interface circuitry 51 may transmit and receive signals to and from the memory controller 60 through the second to eighth pins P12 to P18.

The memory interface circuitry 51 may receive a command latch enable signal CLE, an address latch enable signal ALE, and a write enable signal nWE from the memory controller 60 through the second to fourth pins P12 to P14. The memory interface circuitry 51 may receive a data signal DQ from the memory controller 60 through the seventh pin P17 or transmit the data signal DQ to the memory controller 60. A command CMD, an address ADDR, and data DATA may be transmitted via the data signal DQ. For example, the data signal DQ may be transmitted through a plurality of data signal lines. In this case, the seventh pin P17 may include a plurality of pins respectively corresponding to a plurality of data signals DQ.

The memory interface circuitry 51 may obtain the command CMD from the data signal DQ, received in an enable section (e.g., a high-level state) of the command latch enable signal CLE based on a toggle point in times of the write enable signal nWE. The memory interface circuitry 51 may obtain the address ADDR from the data signal DQ, received in an enable section (e.g., a high-level state) of the address latch enable signal ALE based on the toggle point in times of the write enable signal nWE.

In an embodiment, the write enable signal nWE may be maintained at a static state (e.g., a high level or a low level) and toggle between the high level and the low level. For example, the write enable signal nWE may toggle in a section in which the command CMD or the address ADDR is transmitted. Thus, the memory interface circuitry 51 may obtain the command CMD or the address ADDR based on the toggle point in times of the write enable signal nWE.

The memory interface circuitry 51 may receive a read enable signal nRE from the memory controller 60 through the fifth pin P15. The memory interface circuitry 51 may receive a data strobe signal DQS from the memory controller 60 through the sixth pin P16 or transmit the data strobe signal DQS to the memory controller 60.

In a data (DATA) output operation of the memory device 50, the memory interface circuitry 51 may receive the read enable signal nRE, for toggling through the fifth pin P15, before outputting the data DATA. The memory interface circuitry 51 may generate the data strobe signal DQS, for toggling based on the toggling of the read enable signal nRE. For example, the memory interface circuitry 51 may generate a data strobe signal DQS, which starts toggling after a predetermined delay (e.g., tDQSRE), based on a toggling start time of the read enable signal nRE. The memory interface circuitry 51 may transmit the data signal DQ including the data DATA based on a toggle point in time of the data strobe signal DQS. Thus, the data DATA may be aligned with the toggle point in time of the data strobe signal DQS and transmitted to the memory controller 60.

In a data (DATA) input operation of the memory device 50, when the data signal DQ including the data DATA is received from the memory controller 60, the memory interface circuitry 51 may receive the data strobe signal DQS, for toggling, along with the data DATA from the memory controller 60. The memory interface circuitry 51 may obtain the data DATA from the data signal DQ based on the toggle point in times of the data strobe signal DQS. For example, the memory interface circuitry 51 may sample the data signal DQ at rising and falling edges of the data strobe signal DQS and obtain the data DATA.

The memory interface circuitry 51 may transmit a ready/busy output signal nR/B to the memory controller 60 through the eighth pin P18. The memory interface circuitry 51 may transmit state information of the memory device 50 through the ready/busy output signal nR/B to the memory controller 60. When the memory device 50 is in a busy state (i.e., when operations are being performed in the memory device 50), the memory interface circuitry 51 may transmit a ready/busy output signal nR/B indicating the busy state to the memory controller 60. When the memory device 50 is in a ready state (i.e., when operations are not performed or completed in the memory device 50), the memory interface circuitry 51 may transmit a ready/busy output signal nR/B indicating the ready state to the memory controller 60. For example, while the memory device 50 is reading data DATA from the memory cell array 53 in response to a page read command, the memory interface circuitry 51 may transmit a ready/busy output signal nR/B indicating a busy state (e.g., a low level) to the memory controller 60. For example, while the memory device 50 is programming data DATA to the memory cell array 53 in response to a program command, the memory interface circuitry 51 may transmit a ready/busy output signal nR/B indicating the busy state to the memory controller 60.

The control logic circuitry 52 may control all operations of the memory device 50. The control logic circuitry 52 may receive the command/address CMD/ADDR obtained from the memory interface circuitry 51. The control logic circuitry 52 may generate control signals for controlling other components of the memory device 50 in response to the received command/address CMD/ADDR. For example, the control logic circuitry 52 may generate various control signals for programming data DATA to the memory cell array 53 or reading the data DATA from the memory cell array 53.

The memory cell array 53 may store the data DATA obtained from the memory interface circuitry 51, via the control of the control logic circuitry 52. The memory cell array 53 may output the stored data DATA to the memory interface circuitry 51 via the control of the control logic circuitry 52.

The memory cell array 53 may include a plurality of memory cells. For example, the plurality of memory cells may be flash memory cells. However, the disclosure is not limited thereto, and the memory cell may be a resistive random access memory (RRAM) cell, a ferroelectric random access memory (FRAM) cell, a phase change random access memory (PRAM) cell, a thyristor random access memory (TRAM) cell, or a magnetic random access memory (MRAM) cell. Hereinafter, an embodiment in which the memory cells are NAND flash memory cells will be mainly described.

The memory controller 60 may include first to eighth pins P21 to P28 and a controller interface circuitry 61. The first to eighth pins P21 to P28 may respectively correspond to the first to eighth pins P11 to P18 of the memory device 50.

The controller interface circuitry 61 may transmit the chip enable signal nCE to the memory device 50 through the first pin P21. The controller interface circuitry 61 may transmit and receive signals to and from the memory device 50, selected by the chip enable signal nCE, through the second to eighth pins P22 to P28.

The controller interface circuitry 61 may transmit the command latch enable signal CLE, the address latch enable signal ALE, and the write enable signal nWE to the memory device 50 through the second to fourth pins P22 to P24. The controller interface circuitry 61 may transmit or receive the data signal DQ to and from the memory device 50 through the seventh pin P27.

The controller interface circuitry 61 may transmit the data signal DQ including the command CMD or the address ADDR to the memory device 50 along with the write enable signal nWE, for toggling. The controller interface circuitry 61 may transmit the data signal DQ including the command CMD to the memory device 50 by transmitting a command latch enable signal CLE having an enable state. Also, the controller interface circuitry 61 may transmit the data signal DQ including the address ADDR to the memory device 50 by transmitting an address latch enable signal ALE having an enable state.

The controller interface circuitry 61 may transmit the read enable signal nRE to the memory device 50 through the fifth pin P25. The controller interface circuitry 61 may receive or transmit the data strobe signal DQS from or to the memory device 50 through the sixth pin P26.

In a data (DATA) output operation of the memory device 50, the controller interface circuitry 61 may generate a read enable signal nRE, for toggling, and transmit the read enable signal nRE to the memory device 50. For example, before outputting data DATA, the controller interface circuitry 61 may generate a read enable signal nRE, changed from a static state (e.g., a high level or a low level) to a toggling state. Thus, the memory device 50 may generate a data strobe signal DQS, for toggling, based on the read enable signal nRE. The controller interface circuitry 61 may receive the data signal DQ including the data DATA along with the data strobe signal DQS, for toggling, from the memory device 50. The controller interface circuitry 61 may obtain the data DATA from the data signal DQ based on a toggle point in time of the data strobe signal DQS.

In a data (DATA) input operation of the memory device 50, the controller interface circuitry 61 may generate a data strobe signal DQS, for toggling. For example, before transmitting data DATA, the controller interface circuitry 61 may generate a data strobe signal DQS, changed from a static state (e.g., a high level or a low level) to a toggling state. The controller interface circuitry 61 may transmit the data signal DQ including the data DATA to the memory device 50 based on a toggle point in times of the data strobe signal DQS.

The controller interface circuitry 61 may receive a ready/busy output signal nR/B from the memory device 50 through the eighth pin P28. The controller interface circuitry 61 may determine state information of the memory device 50 based on the ready/busy output signal nR/B.

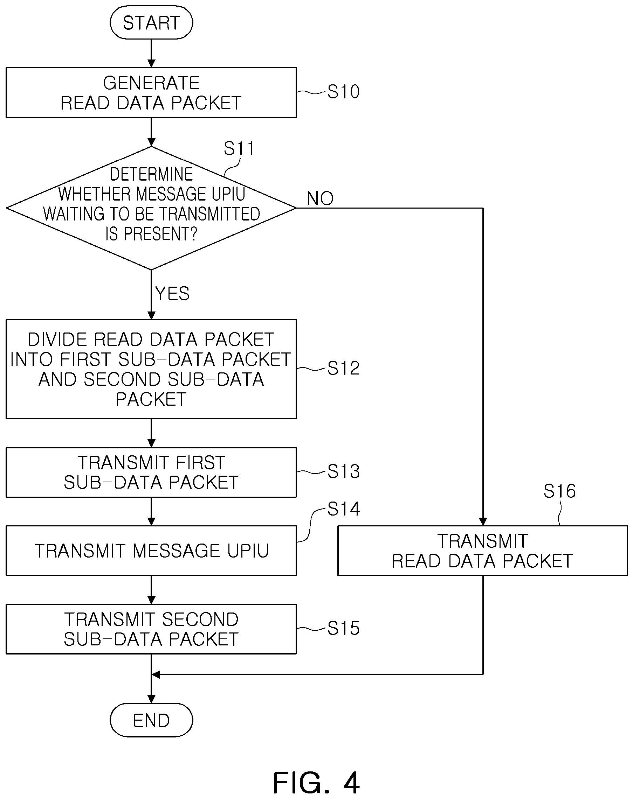

FIG. 4 is a flowchart illustrating an operation of a memory system according to an embodiment of the present disclosure.

Referring to FIG. 4, an operation of a memory system according to an embodiment of the present disclosure may begin by generating a read data packet (S10). For example, the memory system may generate a read data packet in response to a data read command received from an external host. As described above with reference to FIG. 3, the memory system may include a memory controller and a memory device. The memory controller may read data from the memory device and may generate a read data packet.

When a read data packet is generated and transmission to the external host is ready, the memory controller may determine whether a message UFS-Protocol-Information-Unit (UPIU) waiting to be transmitted is present (S11). As an example, the message UPIU may include at least one of a Ready-To-Transfer Ready-To-Transfer(RTT) UPIU informing the external host of a ready to receive data condition and a response UPIU informing the external host of completion of a specific operation or the like. The message UPIU may be stored in a buffer memory inside or outside the memory controller. In an embodiment, the determination of S11 may be performed at or before the time when a header of the read data packet is transmitted.

When there is the message UPIU waiting to be transmitted as a result of the determination in S11, the memory controller may divide the read data packet generated in S10 into a first sub-data packet and a second sub-data packet (S12). A block for dividing the read data packet into the first sub-data packet and the second sub-data packet may be implemented with hardware inside the memory controller. The read data packet may be generated to have a size determined by the memory controller, and, for example, may have a size of 32 KB or less. When there is the message UPIU waiting to be transmitted, the memory controller may divide the read data packet to generate the first sub-data packet and the second sub-data packet, and a size of each of the first sub-data packet and the second sub-data packet may be smaller than a size of the read data packet. When the division is completed, the memory controller may transmit the first sub-data packet to the external host through an interface (S13).

When the first sub-data packet is transmitted, the memory controller may sequentially transmit the message UPIU and the second sub-data packet (S14 and S15). Therefore, compared to a general method in which a message UPIU should be transmitted after transmission of a read data packet is completed, the time when the message UPIU is transmitted to the external host may be accelerated, and the external host may control the memory device with reference to the message UPIU. When the message UPIU does not exist as a result of the determination in S11, the memory controller may transmit the read data packet generated in S10 to the external host without a separate additional operation (S16).

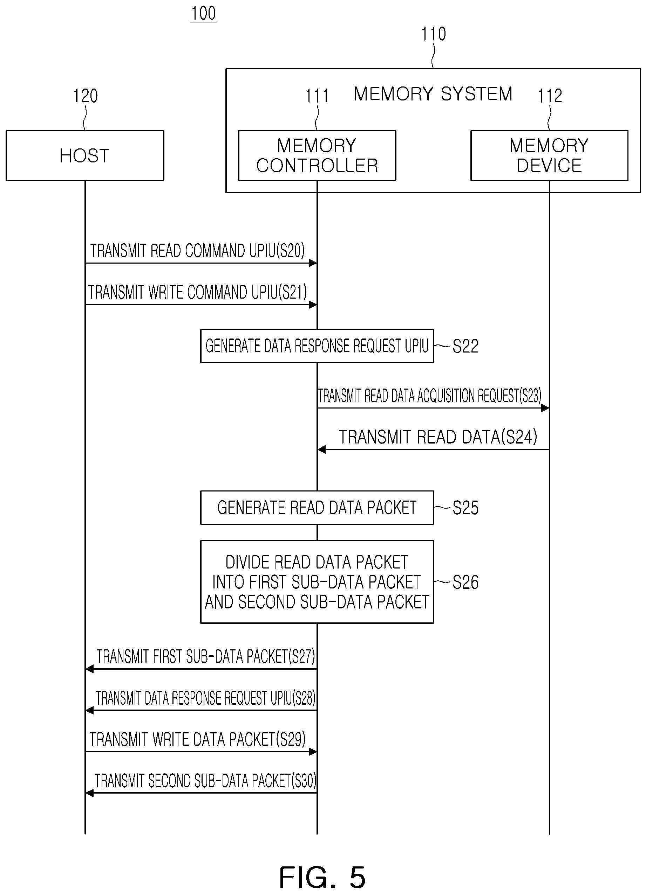

FIG. 5 is a diagram illustrating an operation of an electronic device including a memory system according to an embodiment of the present disclosure.

Referring to FIG. 5, a memory system 110 according to an embodiment of the present disclosure may include a memory controller 111 and a memory device 112. The memory system 110 may be included in an electronic device 100, together with a host 120. For example, the memory system 110 may be a UFS device and the electronic device 100 may be a device connected to the UFS device to store data in the UFS device or read the data stored in the UFS device, to execute a predetermined function.

An operation of the electronic device 100 may begin with the host 120 transmitting a read command UPIU to the memory system 110 (S20). The host 120 may transmit a read command UPIU to the memory controller 111 to retrieve data stored in the memory system 110, and the memory controller 111 may acquire read data stored in the memory device 112 in response to the read command UPIU.

In the embodiment illustrated in FIG. 5, after the host 120 transmits the read command UPIU, a write command UPIU may be transmitted to the memory system 110 (S21). The write command UPIU may be a UPIU that may be transmitted by the host 120 to write data to the memory system 110, and the memory controller 111 may generate a data response request UPIU in response to the write command UPIU (S22). The data response request UPIU may be a message UPIU informing the memory system 110 of a ready to receive data condition from the host 120, and the host 120 receiving the data response request UPIU may transmit write data to the memory system 110.

The memory controller 111 may generate a data response request UPIU and may transmit a read data acquisition request to the memory device 112 in response to the read command UPIU received in S20 (S23). The read data acquisition request may include address data in which read data is stored, and the memory device 112 may transmit the read data to the memory controller 111 (S24). The memory controller 111 may use the read data acquired from the memory device 112 to generate a read data packet, a format that may be transmitted by a UFS protocol (S25).

In the embodiment illustrated in FIG. 5, at a time when the memory controller 111 generates the read data packet and begins transmission thereof, a data response request UPIU stored in a buffer memory inside or outside the memory controller 111 is present. Therefore, before transmitting the read data packet, the memory controller 111 may divide the read data packet into a first sub-data packet and a second sub-data packet (S26). The memory controller 111 may first transmit the first sub-data packet to the host 120 (S27) and then transmit a data response request UPIU to the host 120 (S28).

Upon receiving the data response request UPIU, the host 120 may transmit a write data packet to the memory system 110 (S29). The write data packet may include write data that the host 120 intends to store in the memory system 110. The memory system 110 may receive the write data packet from the host 120 and may transmit the second sub-data packet to the host 120 (S30). For example, the operation of S29 and the operation of S30 may be simultaneously executed between the host 120 and the memory system 110.

As described above with reference to FIG. 1, when the memory system 110 is a UFS device, two pairs of differential signals for exchanging data may exist between the memory system 110 and the host 120. Among the two pairs of differential signals, a first pair of differential signals may be used by the memory system 110 to transmit data to the host 120 and a second pair of differential signals may be used by the host 120 to transmit data to the memory system 110.

In order for the host 120 to transmit a write data packet or the like to the memory system 110, it may first receive a Ready-To-Transfer UPIU, informing it of a ready to receive data condition, from the memory system 110. The Ready-To-Transfer UPIU may be transmitted from the memory system 110 to the host 120 through the first pair of differential signals, similarly to a read data packet or the like. Therefore, while the read data packet is being transmitted, the host 120 may not receive the Ready-To-Transfer UPIU, and as a result, the read data packet and the write data packet may not be simultaneously transmitted, despite the presence of two pairs of differential signals.

In an embodiment of the present disclosure, when there may be a Ready-To-Transfer UPIU waiting to be transmitted, the memory controller 111 may divide a read data packet into a first sub-data packet and a second sub-data packet, and, after transmitting the first sub-data packet, the Ready-To-Transfer UPIU may be transmitted earlier than the second sub-data packet. Since the host 120 may receive the Ready-To-Transfer UPIU at a relatively early time, while the second sub-data packet is transmitted through the first pair of differential signals, the write data packet may be simultaneously transmitted through the second pair of differential signals. Therefore, performance in transmitting data between the host 120 and the memory system 110 may be improved.

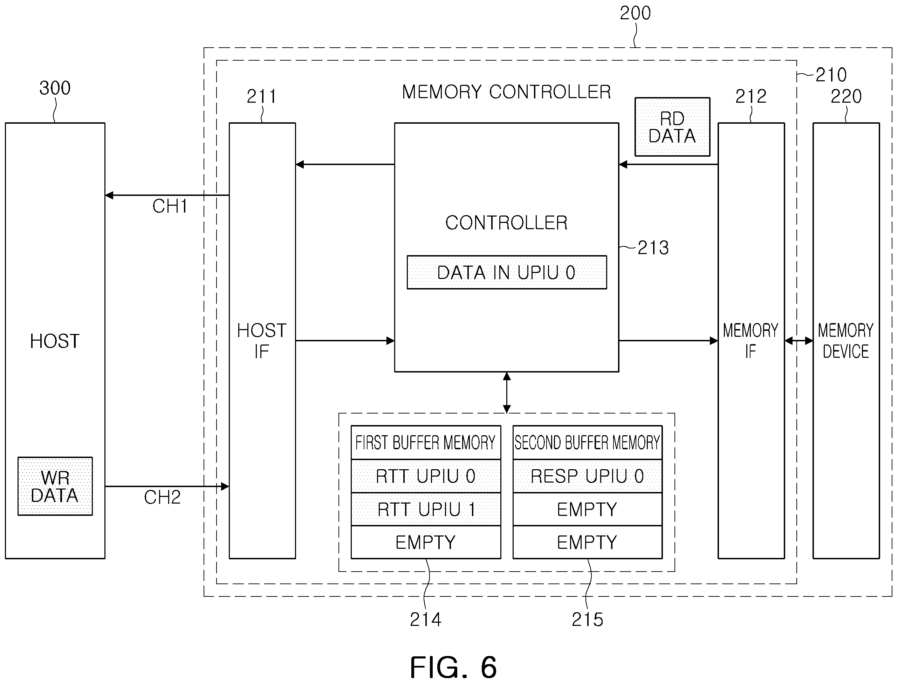

FIGS. 6 to 11 are diagrams illustrating an operation of a memory system according to an embodiment of the present disclosure.

First, referring to FIG. 6, a memory system 200 may include a memory controller 210 and a memory device 220, and may operate in conjunction with a host 300. The memory controller 210 may include a host interface 211, a memory interface 212, a controller 213, and buffer memories 214 and 215. The memory controller 210 may exchange data with the host 300 through the host interface 211 and may exchange data with the memory device 220 through the memory interface 212. The buffer memories 214 and 215 may store a message UPIU required for an operation of the memory system 200.

The host interface 211 may exchange data with the host 300 through a first channel CH1 and a second channel CH2. For example, the first channel CH1 may be a data transmission channel for transmitting data to the host 300 by the host interface 211, and the second channel CH2 may be a data receiving channel for receiving data from the host 300 by the host interface 211. Data may be transmitted as a differential signal in the first channel CH1 and the second channel CH2.

The memory controller 210 may acquire read data RD DATA from the memory device 220 to generate a read data packet DATA IN UPIU 0, upon receiving a read command UPIU from the host 300. For example, the memory controller 210 may use a read data RD DATA to generate a read data packet DATA IN UPIU 0, having a format and a size that may be transmitted to the host 300. For example, a minimum size of the read data packet DATA IN UPIU 0 may be 4 KB, and a maximum size of the read data packet DATA IN UPIU 0 may be 32 KB. The read data packet DATA IN UPIU 0 may be transmitted to the host 300 through the first channel CH1.

The host 300 may prepare write data WR DATA to be written to the memory system 200 while transmitting the read command UPIU to the memory controller 210. The write data WR DATA may be transmitted from the host 300 to the memory system 200 through the second channel CH2. Therefore, while the host 300 receives the read data packet DATA IN UPIU 0 through the first channel CH1, the host 300 may simultaneously transmit the write data WR DATA to the memory system 200 through the second channel CH2. After receiving a Ready-To-Transfer UPIU (RTT UPIU 0) from the memory system 200, the host 300 may transmit the write data WR DATA to the memory system 200.

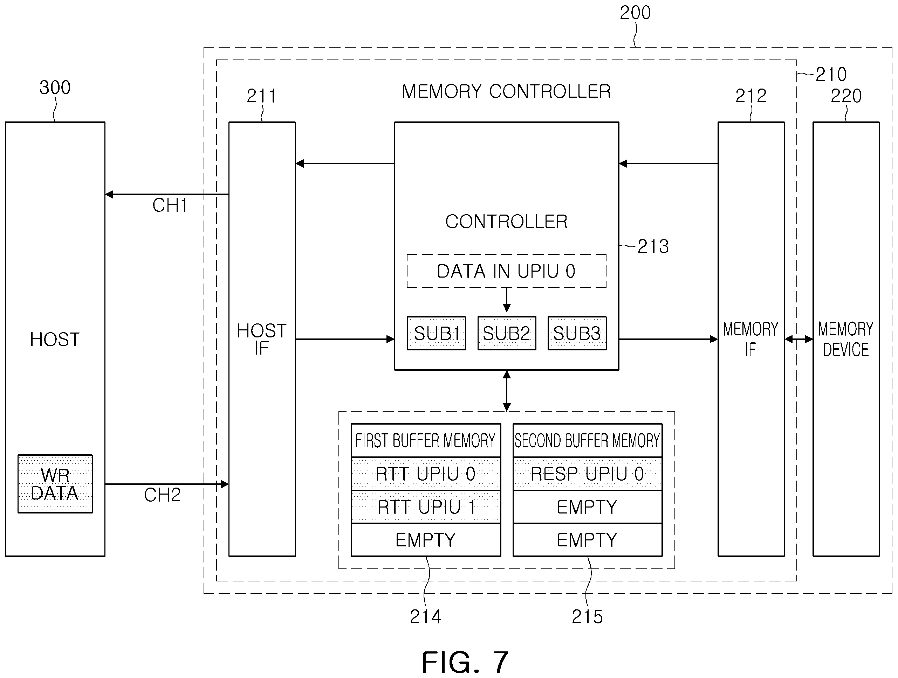

Referring to FIG. 7, since the message UPIU is present in the buffer memories 214 and 215, the memory controller 210 may divide the read data packet DATA IN UPIU 0 into sub-data packets SUB1 to SUB3. A size of each of the sub-data packets SUB1 to SUB3 may be smaller than a size of the read data packet DATA IN UPIU 0.

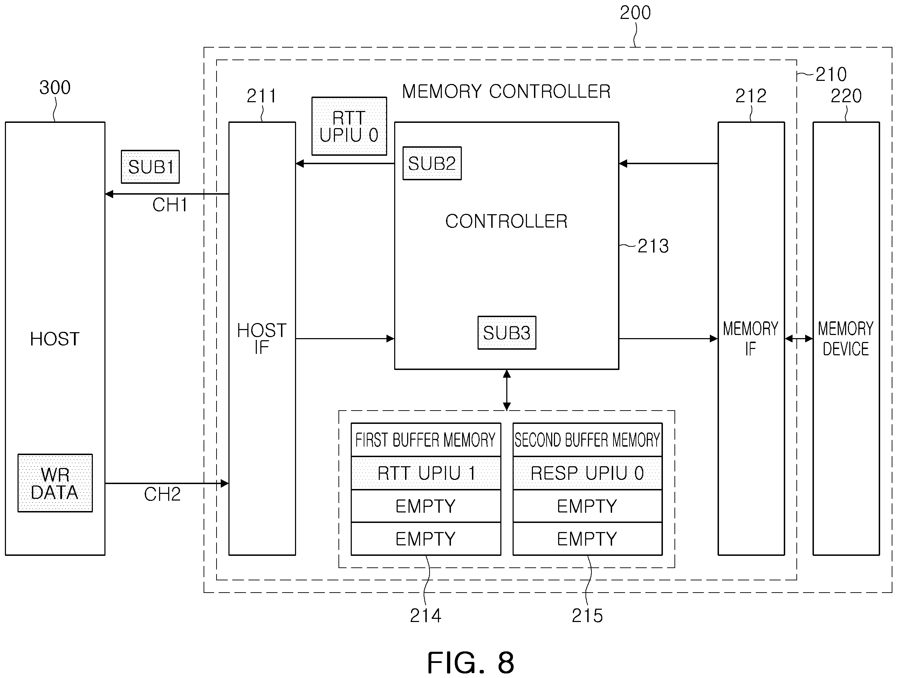

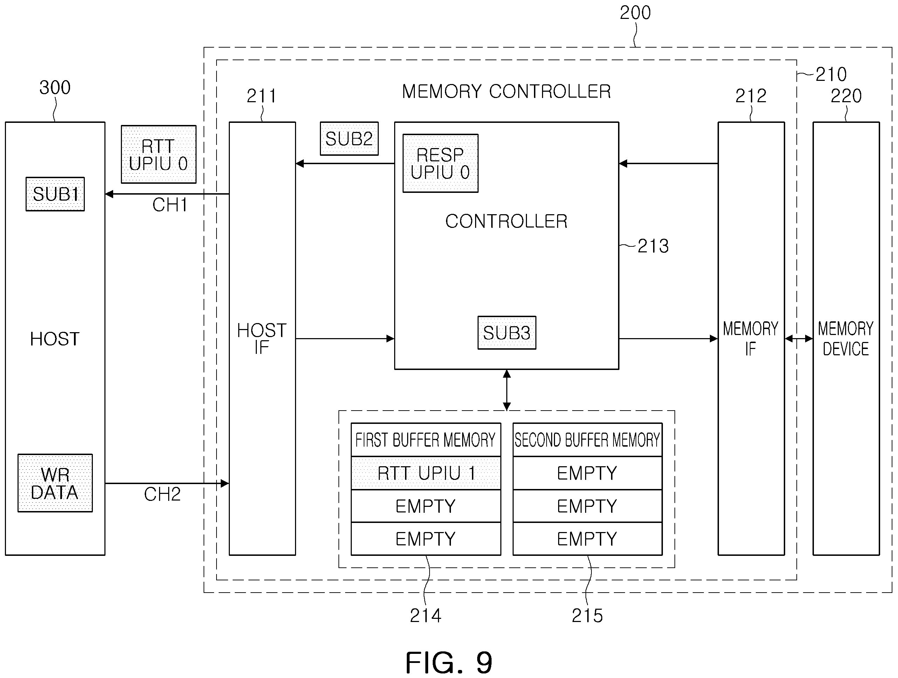

Next, referring to FIG. 8, the memory controller 210 may transmit a first sub-data packet SUB1 to the host 300 through the host interface 211. While the first sub-data packet SUB1 is being transmitted, the memory controller 210 may acquire a first Ready-To-Transfer UPIU RTT UPIU 0 stored in the first buffer memory 214 and may prepare transmission of the acquired first Ready-To-Transfer UPIU RTT UPIU 0 through the host interface 211. Therefore, as illustrated in FIG. 9, after the first sub-data packet SUB1 is transmitted to the host 300, the first Ready-To-Transfer UPIU RTT UPIU 0 may be transmitted to the host 300, not a second sub-data packet SUB2.

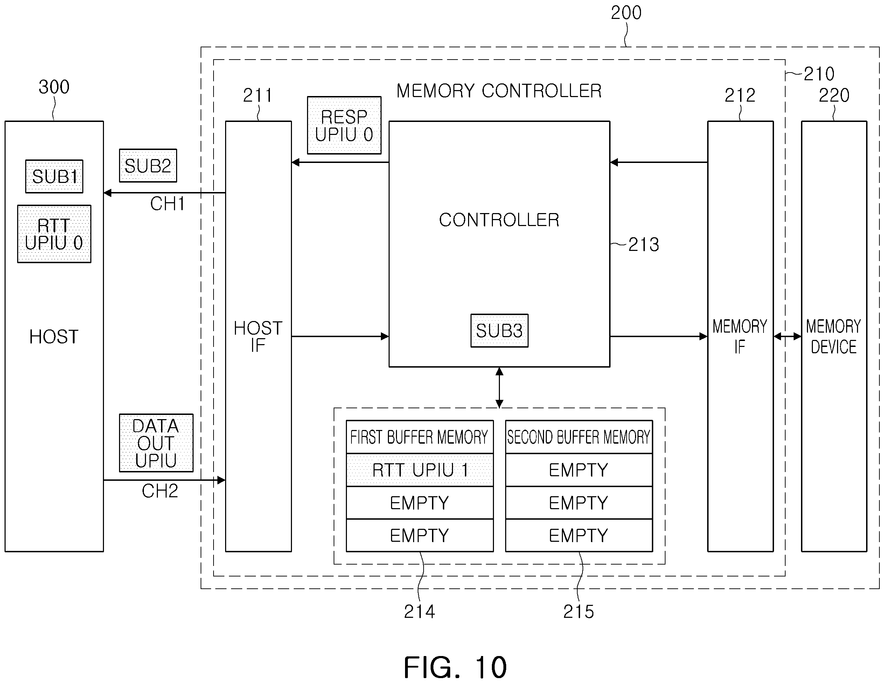

When the host 300 receives the first Ready-To-Transfer UPIU RTT UPIU 0, the host 300 may recognize that the memory system 200 is ready to receive the write data WR DATA and may generate and transmit a write data packet DATA OUT UPIU to the memory system 200. Referring to FIG. 10, the write data packet DATA OUT UPIU may be transmitted to the host interface 211 through the second channel CH2. Therefore, the memory system 200 may receive the write data packet DATA OUT UPIU through the second channel CH2, while sending the second sub-data packet SUB2 to the first channel CH1.

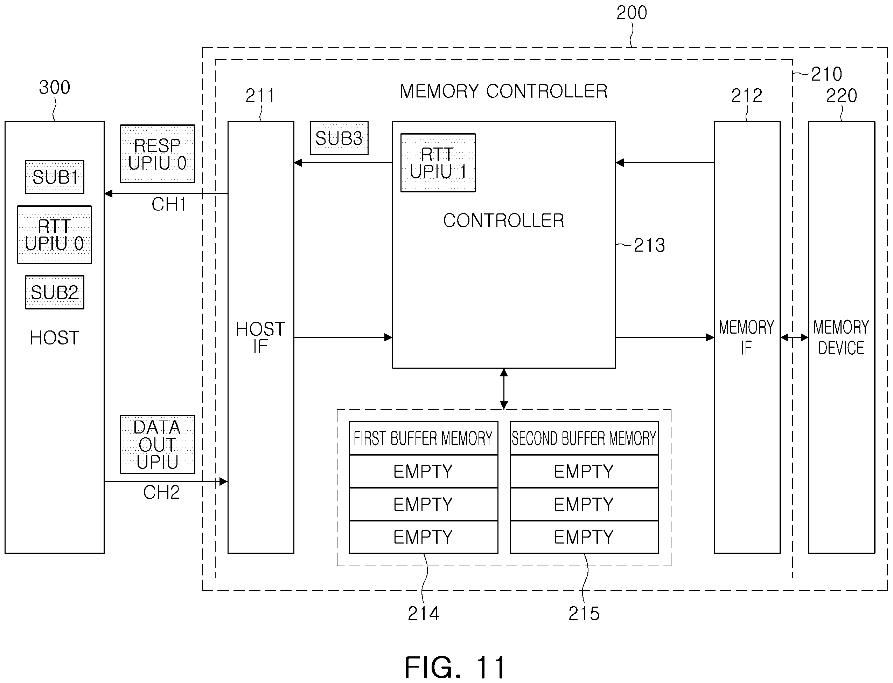

Referring to FIG. 11, while receiving the write data packet DATA OUT UPIU through the second channel CH2, the memory system 200 may transmit a response UPIU RESP UPIU 0 to the host 300 through the first channel CH1. When the transmission of the response UPIU RESP UPIU 0 is completed, the memory system 200 may sequentially transmit a third sub-data packet SUB3 and a second Ready-To-Transfer UPIU RTT UPIU 1 to the host 300. For example, packets including read data RD DATA may be transmitted to the host 300 through the first channel CH1 alternately with the messages UPIU stored in the buffer memories 214 and 215.

After receiving the first Ready-To-Transfer UPIU RTT UPIU 0, since the host 300 may transmit the write data packet DATA OUT UPIU, the second sub-data packet SUB2 between the host 300 and the memory system 200 may be transmitted at least simultaneously with the write data packet DATA OUT UPIU. At least one of the response UPIU RESP UPIU 0 and the third sub-data packet SUB3 may not be transmitted simultaneously with the write data packet DATA OUT UPIU, depending on a size of the write data packet DATA OUT UPIU.

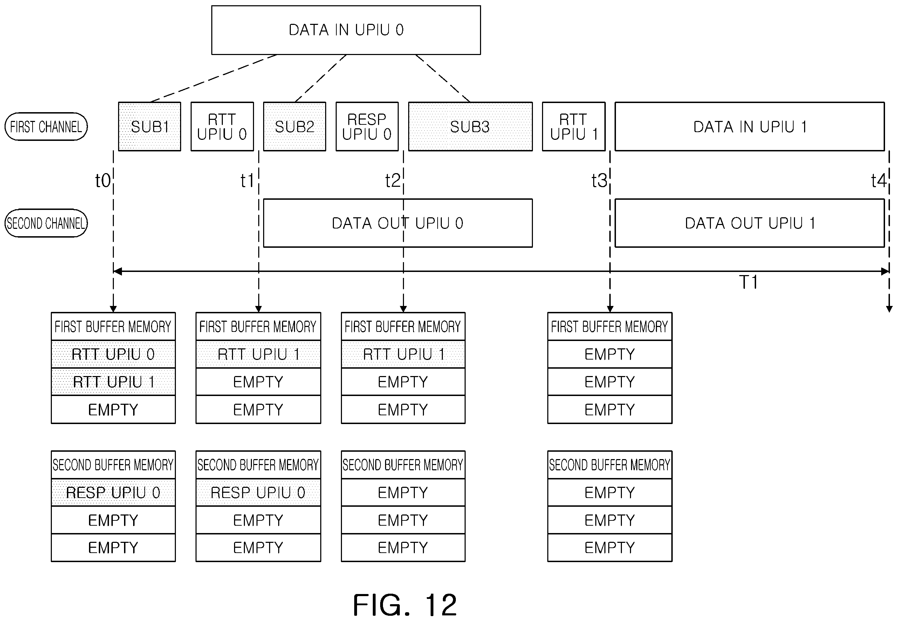

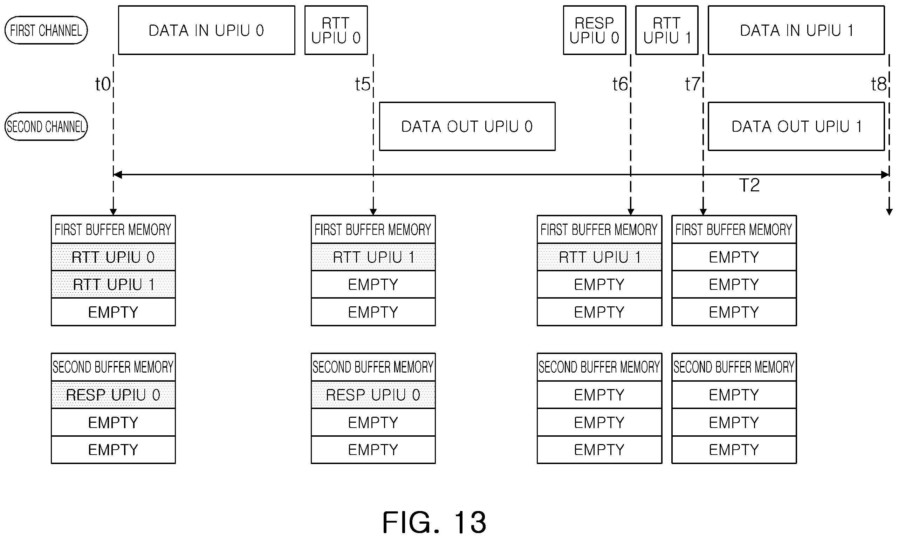

FIGS. 12 and 13 are diagrams illustrating an operation of a memory controller according to an embodiment of the present disclosure.

Referring to FIG. 12, messages UPIU may exist in a first buffer memory and a second buffer memory. Therefore, a memory controller may divide a first read data packet DATA IN UPIU 0, to be output to a host, into sub-data packets SUB1 to SUB3. Each of the sub-data packets SUB1 to SUB3 may have a size smaller than a size of the first read data packet DATA IN UPIU 0.

For example, when the size of the first read data packet DATA IN UPIU 0 may be less than or equal to a predetermined reference size, the memory controller may not divide the first read data packet DATA IN UPIU 0. This may be based on determining that transmission of the messages UPIU is not significantly delayed, even when the first read data packet DATA IN UPIU 0 is not divided. Alternatively, when the size of the first read data packet DATA IN UPIU 0 is a minimum size of a read data packet that may be transmitted from a memory system to the host, the memory controller may not divide the first read data packet DATA IN UPIU 0. In this case, the memory controller may transmit the messages UPIU to the host, after the transmission of the first read data packet DATA IN UPIU 0 is completed. In an embodiment, the size of the first read data packet DATA IN UPIU 0 may be 4 KB or more and 32 KB or less, and a reference size determining whether to divide the first read data packet DATA IN UPIU 0 may be determined in various ways, such as 4 KB, 8 KB, 12KB, and the like.

In the embodiment illustrated in FIG. 12, the size of the first read data packet DATA IN UPIU 0 may be larger than the minimum size. Therefore, until the transmission of the first read data packet DATA IN UPIU 0 is completed, when waiting, the transmission of messages UPIU may be too late. Therefore, the first read data packet DATA IN UPIU 0 may be divided into sub-data packets SUB1 to SUB3 and the sub-data packets SUB1 to SUB3 and the messages UPIU may alternately transmitted, to transmit the messages UPIU earlier.

For example, after transmission of a first sub-data packet SUB1 is completed, the memory controller may transmit a first Ready-To-Transfer UPIU RTT UPIU 0 to the host, not a second sub-data packet SUB2. Therefore, the number of messages UPIU stored in the buffer memories at a start point in time t0 and a first point in time t1 may be different from each other. At the first point in time t1 in which the transmission of the first Ready-To-Transfer UPIU RTT UPIU 0 is completed, the memory controller may start transmitting the second sub-data packet SUB2.

In addition, the host may also transmit a first write data packet DATA OUT UPIU 0 to the memory controller from the first point in time t1. As described above, a host may transmit a write data packet to a memory controller, after receiving a Ready-To-Transfer UPIU. Therefore, after the first point in time t1, at the same time, the second sub-data packet SUB2 may be transmitted through a first channel and the first write data packet DATA OUT UPIU 0 may be transmitted through a second channel.

After completing the transmission of the second sub-data packet SUB2, the memory controller may transmit a response UPIU RESP UPIU 0 to the host. Therefore, after a second point in time t2, the messages UPIU may not exist in the second buffer memory. After the second point in time t2, when the transmission of the response UPIU RESP UPIU 0 is completed, the memory controller may transmit a third sub-data packet SUB3 to the host through the first channel.

When the transmission of the third sub-data packet SUB3 is completed, the memory controller may transmit a second Ready-To-Transfer UPIU RTT UPIU 1, which may be a message UPIU remaining in the buffer memory, to the host. Upon receiving the second Ready-To-Transfer UPIU RTT UPIU 1, the host may transmit a second write data packet DATA OUT UPIU 1 to the memory controller through the second channel. Also, the memory controller may receive the second write data packet DATA OUT UPIU 1 through the second channel and may transmit a second read data packet DATA IN UPIU 1 to the host through the first channel at time t3. Therefore, data transmission between the host and the memory system through the first channel and the second channel may be terminated at a fourth point in time t4, and a time period required for the data transmission may be defined as a first time period T1.

In the embodiment illustrated in FIG. 12, a size of each of the read data packets and the write data packets may be 32 KB. In addition, a size of each of the first sub-data packet SUB1 and the second sub-data packet SUB2 may be 4 KB, and a size of the third sub-data packet SUB3 may be 24 KB. Under such conditions, a point in time at which transmission of the first write data packet DATA OUT UPIU 0 is terminated and a point in time at which transmission of the first read data packet DATA IN UPIU 0 is terminated may be substantially the same.

This embodiment is only illustrative, and sizes of data packets may be variously changed. As an example, the first read data packet DATA IN UPIU 0 may be divided into four or more sub-data packets, as needed.

Also, as described above, when the size of the first read data packet DATA IN UPIU 0 is 4 KB, which may be a minimum size, the memory controller may transmit the messages UPIU after completing the transmission of the first read data packet DATA IN UPIU 0. In this case, after the transmission of the first read data packet DATA IN UPIU 0 is completed, the first data response request UPIU RTT UPIU 0 and the response UPIU RESP UPIU 0 may be sequentially transmitted through the first channel. Therefore, the first write data packet DATA OUT UPIU 0 may be transmitted simultaneously with the response UPIU RESP UPIU 0 and/or the second read data packet DATA IN UPIU 1.

In the embodiment illustrated in FIG. 12, a size of each of the first sub-data packet SUB1 and the second sub-data packet SUB2 may be set to 4 KB, to advance the transmission point in times of the first Ready-To-Transfer UPIU RTT UPIU 0 and the response UPIU RESP UPIU 0 as soon as possible. In the embodiment illustrated in FIG. 12, a size of the first write data packet DATA OUT UPIU 0 may be 32 KB and the memory controller need not transmit the second Ready-To-Transfer UPIU RTT UPIU 1 to the host until the transmission of the first write data packet DATA OUT UPIU 0 is terminated. Therefore, performance in transmitting data may be improved by dividing the first read data packet DATA IN UPIU 0 into the three (3) sub-data packets SUB1 to SUB3.

FIG. 13 is a diagram of a comparative example illustrating an operation of a memory controller according to an embodiment of the present disclosure. Referring to FIG. 13, in the comparative example, even when messages UPIU exist, the messages UPIU may be transmitted after transmission of a first read data packet DATA IN UPIU 0 is completed. Therefore, after the transmission of the first read data packet DATA IN UPIU 0 is completed, a host may receive a first Ready-To-Transfer UPIU RTT UPIU 0 and a first write data packet DATA OUT UPIU 0. A first write data packet DATA OUT UPIU 0 may start to be transmitted from a fifth point in time t5. The fifth point in time t5 may be later than the first point in time t1, which may be a transmission start point in time of the first write data packet DATA OUT UPIU 0 in the embodiment illustrated in FIG. 12.

After receiving the first write data packet DATA OUT UPIU 0, the memory controller may transmit a response UPIU RESP UPIU 0 and a second Ready-To-Transfer UPIU RTT UPIU 1 to the host, the latter of which is transmitted at time t6. A second read data packet DATA IN UPIU 1 may not be transmitted to the host until a seventh point in time t7, and after the seventh point in time t7, the second read data packet DATA IN UPIU 1 and the second write data packet DATA OUT UPIU 1 may be simultaneously transmitted between the host and a memory system. Therefore, data transmission between the host and the memory system through a first channel and a second channel may be terminated at an eighth point in time t8, and a second time period T2, longer than the first time period T1, may be required for the data transmission.

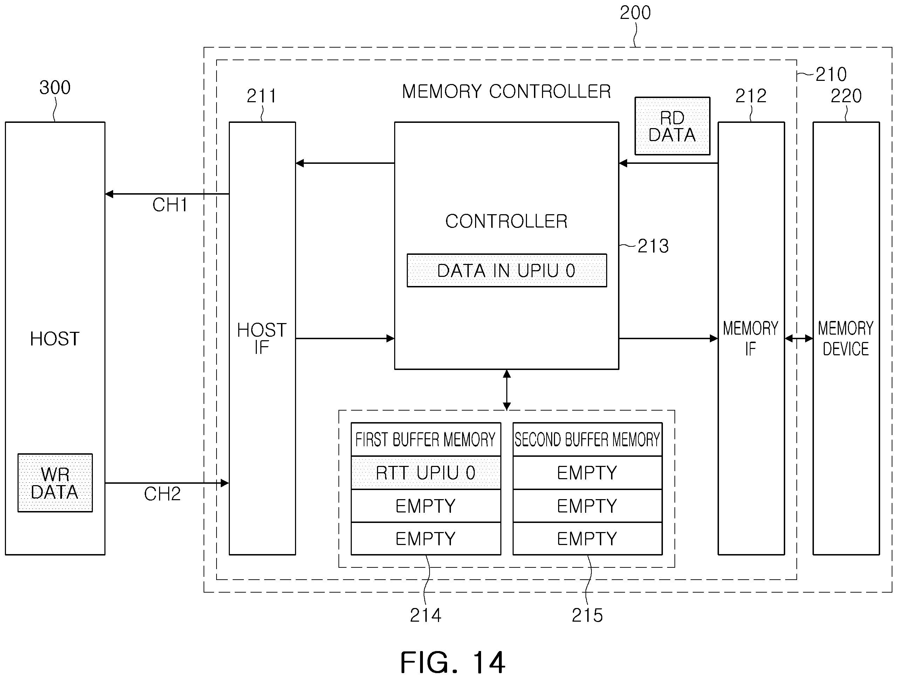

FIGS. 14 to 19 are diagrams illustrating an operation of a memory system according to an embodiment of the present disclosure.

In an embodiment illustrated in FIGS. 14 to 19, configurations of a memory system 200 and a host 300 may be similar to the embodiment described above with reference to FIGS. 6 to 11. A memory controller 210 may acquire read data RD DATA from a memory device 220 in response to a read request from the host 300. The read data RD DATA may be converted into a first read data packet DATA IN UPIU 0 in a format that may transmit the read data RD DATA to the host 300 according to a UFS protocol. It is assumed that a first Ready-To-Transfer UPIU RTT UPIU 0 may be stored in buffer memories 214 and 215.

Referring to FIG. 14, the host 300 may be ready to transmit write data WR DATA. After first receiving the first Ready-To-Transfer UPIU RTT UPIU 0 from the memory system 200, the host 300 may transmit the write data WR DATA to the memory system 200, which may be a UFS device.

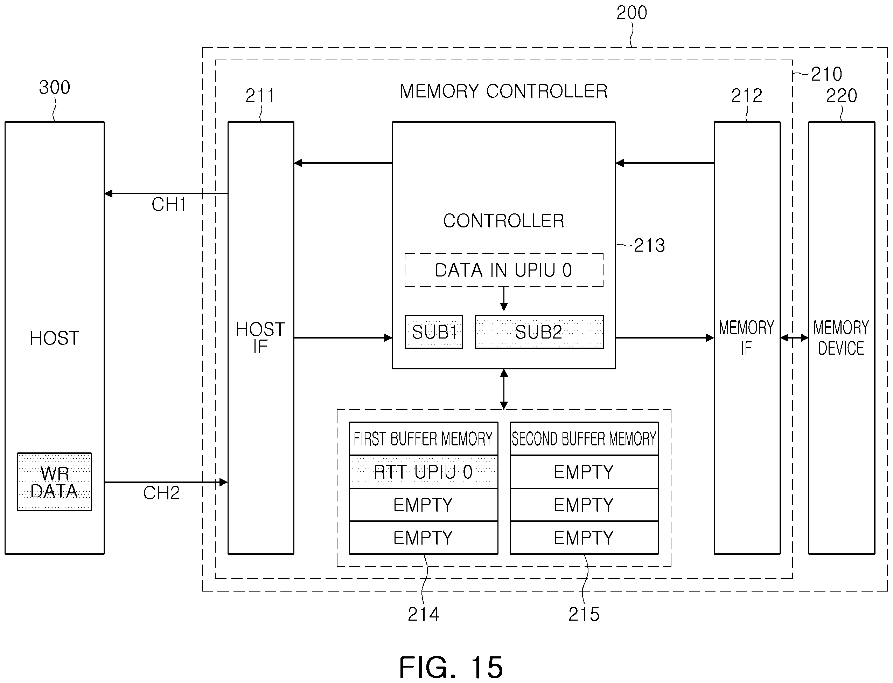

Since only one (1) message UPIU may be stored in the buffer memories 214 and 215, the memory controller 210 may transmit the first read data packet DATA IN UPIU 0 to a first sub-data packet SUB1 and a second sub-data packet SUB2, as illustrated in FIG. 15. A size of each of the first sub-data packet SUB1 and the second sub-data packet SUB2 may be smaller than a size of the first read data packet DATA IN UPIU 0, and each of the first sub-data packet SUB1 and the second sub-data packet SUB2 may have the same size or different sizes. As an example, in order to advance the transmission time of the first Ready-To-Transfer UPIU RTT UPIU 0 as much as possible, a size of the first sub-data packet SUB1 may be smaller than a size of the second sub-data packet SUB2.

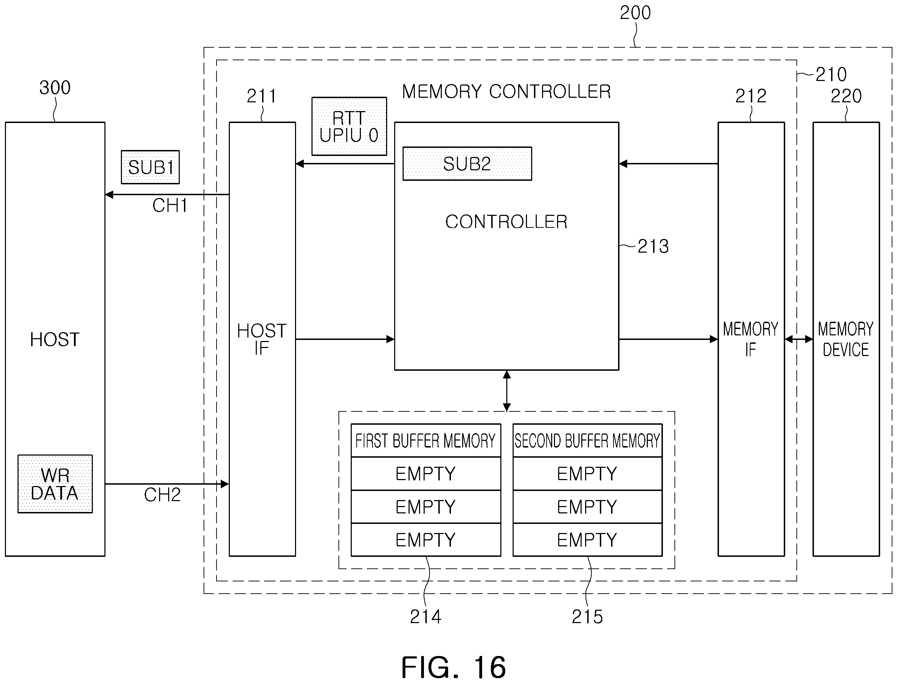

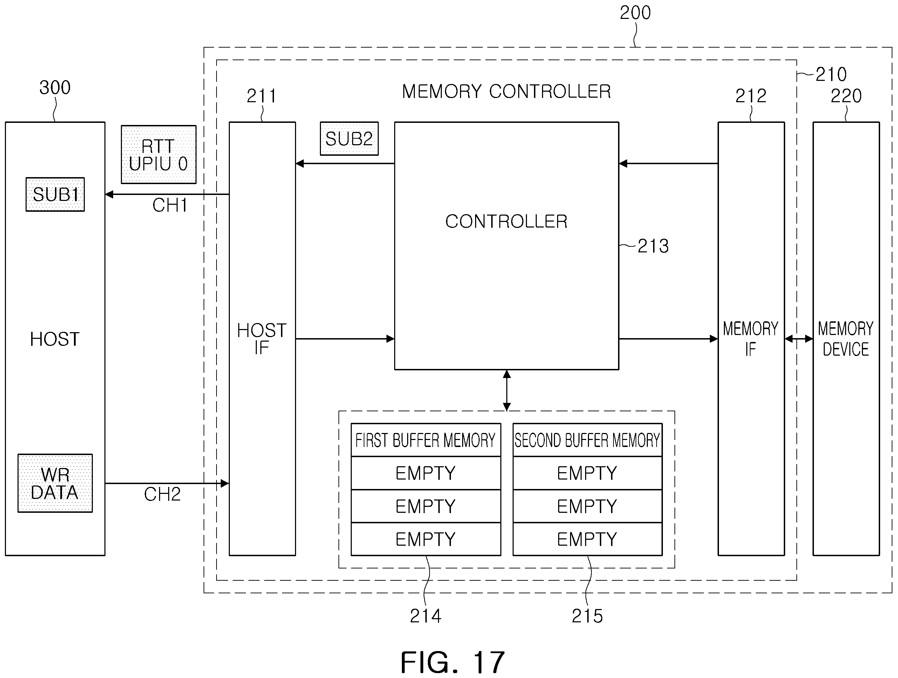

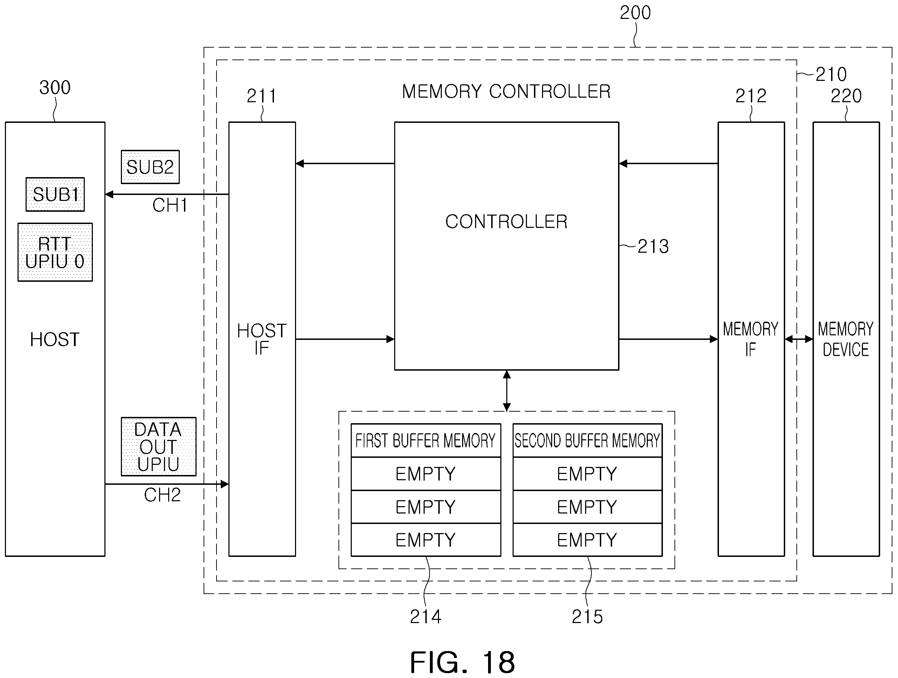

Referring to FIG. 16, the memory controller 210 may first transmit the first sub-data packet SUB 1 to a first channel CH1 through a host interface 211. When the first sub-data packet SUB1 is transmitted, the first Ready-To-Transfer UPIU RTT UPIU 0 and the second sub-data packet SUB2 may be transmitted sequentially through the first channel CH1, as illustrated in FIGS. 17 and 18.

After receiving the first Ready-To-Transfer UPIU RTT UPIU 0 from the memory system 200 through the first channel CH1, the host 300 may transmit the write data WR DATA to the memory system 200. The write data WR DATA may be converted into a write data packet DATA OUT UPIU, and the write data packet DATA OUT UPIU may be transmitted to the memory system 200 through the second channel CH2. Therefore, as illustrated in FIG. 18, the write data packet DATA OUT UPIU and the second sub-data packet SUB2 may be transmitted between the host 300 and the memory system 200 at the same time.

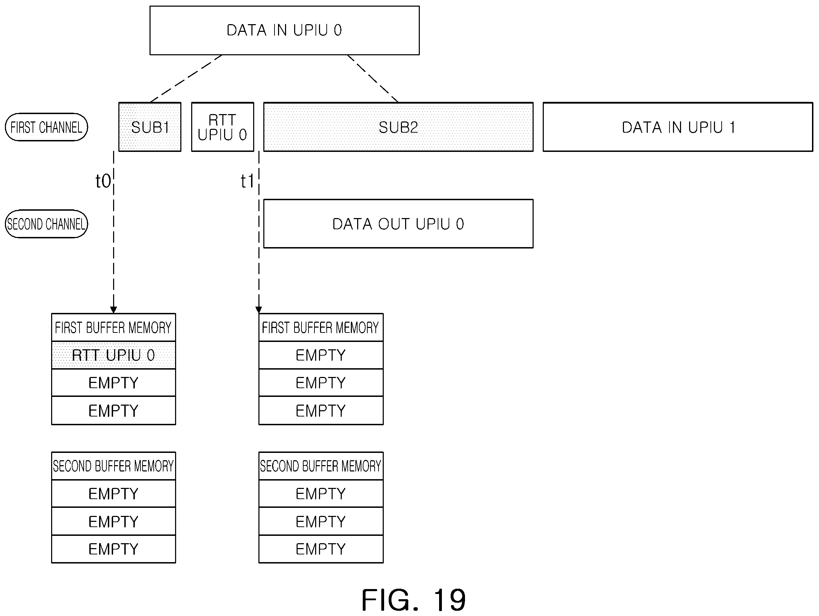

Next, referring to FIG. 19, as the memory controller detects that the message UPIU is present in the first buffer memory at a start point in time t0, the first read data packet DATA IN UPIU 0 may be sent to the sub-data packets SUB1 and SUB2. When the first sub-data packet SUB1 is transmitted through the first channel, the memory controller may first transmit the first Ready-To-Transfer UPIU RTT UPIU 0 stored in the first buffer memory and may then transmit the second sub-data packet SUB2.

For example, as a first point in time t1 at which the transmission of the first Ready-To-Transfer UPIU (RTT UPUI 0) is completed is earlier, an operation in which the host transmits the write data packet DATA OUT UPIU 0 to the memory system may be started and completed at an earlier point in time. Therefore, in an embodiment of the present disclosure, a size of the first sub-data packet SUB1 may be smaller than a size of the second sub-data packet SUB2. For example, the size of the first sub-data packet SUB1 may be a minimum size that the memory system may have a read data packet transmitted to the host.

Since the first channel and the second channel operate independently from each other, the memory system may output the second sub-data packet SUB2 and may receive the write data packet DATA OUT UPIU 0 at the same time. Depending on a size of the write data packet DATA OUT UPIU 0, an operation of receiving the write data packet DATA OUT UPIU 0 may be performed simultaneously with an operation of receiving a second read data packet DATA IN UPIU 1.

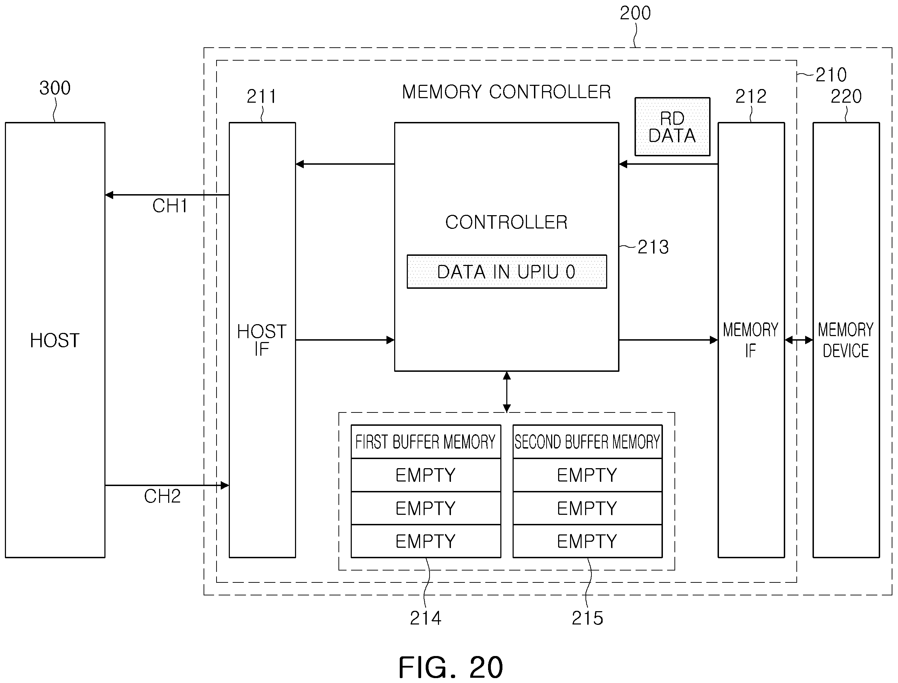

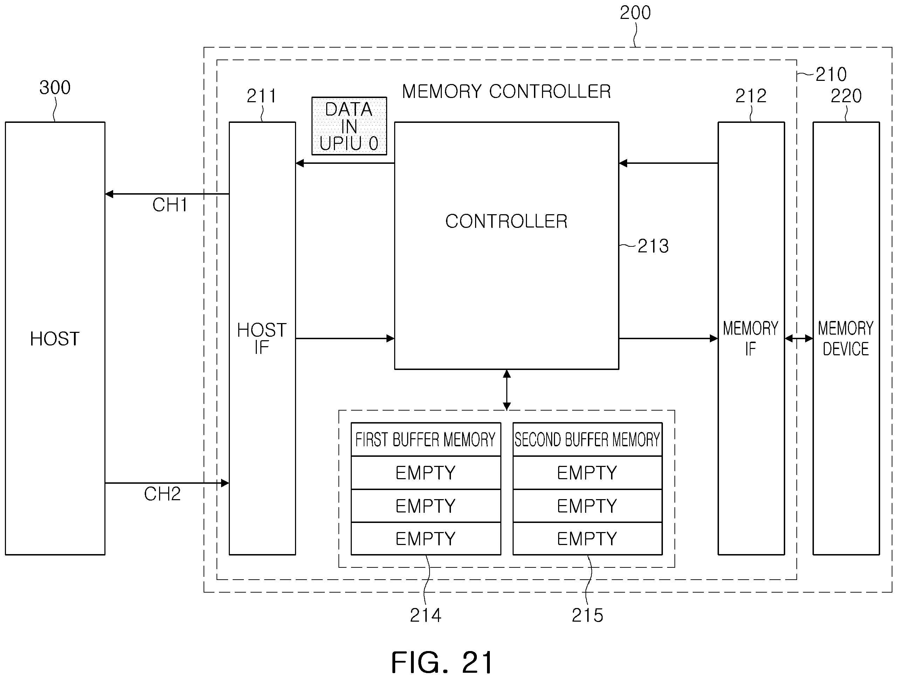

FIGS. 20 and 21 are diagrams illustrating an operation of a memory system according to an embodiment of the present disclosure.

In an embodiment illustrated in FIGS. 20 and 21, configurations of a memory system 200 and a host 300 may be similar to the embodiment described above with reference to FIGS. 6 to 11. A memory controller 210 may acquire read data RD DATA from a memory device 220 in response to a read request from the host 300. The read data RD DATA may be converted into a read data packet DATA IN UPIU 0 in a format that may transmit the read data RD DATA to the host 300 according to a UFS protocol. No message UPIU may be stored in buffer memories 214 and 215.

Since no message UPIU stored in the buffer memories 214 and 215 is present, the memory controller 210 may directly output the read data packet DATA IN UPIU 0 to the host 300 through a first channel CH1. In this case, depending on a size of the read data RD DATA and a size of the read data packet DATA IN UPIU 0, determined by the memory controller 210, two or more read data packets may be transmitted to the host 300.

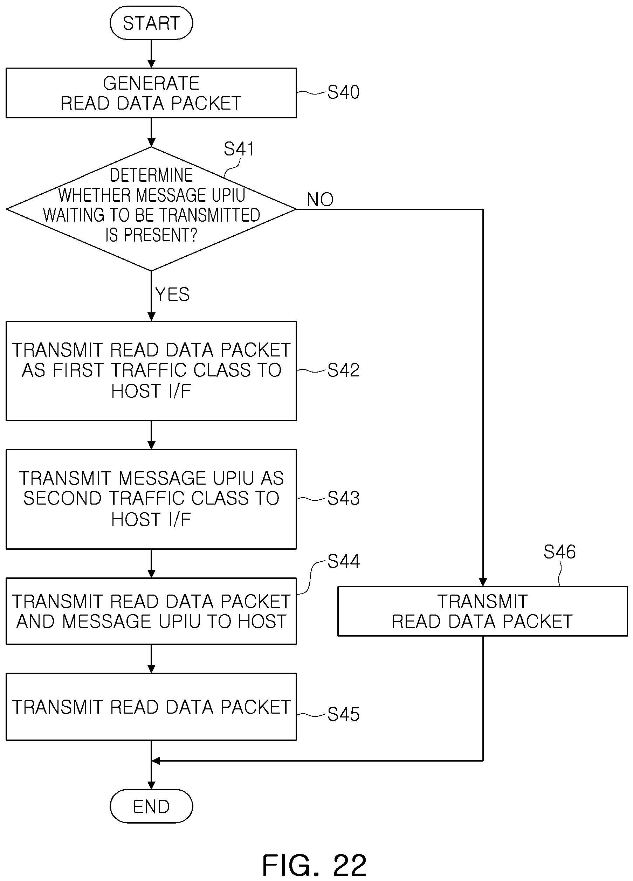

FIG. 22 is a flowchart illustrating an operation of a memory system according to an embodiment of the present disclosure.

Referring to FIG. 22, an operation of a memory system according to an embodiment of the present disclosure may begin by generating a read data packet (S40). For example, the memory system may include a memory controller and a memory device and the memory controller may read data from the memory device and may generate a read data packet in response to a data read command received from an external host. The memory controller may include a host interface, a memory interface, a buffer memory, and a controller.

When a read data packet is generated and transmission to the external host is ready, the memory controller may determine whether a message UFS-Protocol-Information-Unit (UPIU) waiting to be transmitted is present (S41). As an example, the message UPIU may include at least one of a Ready-To-Transfer (RTT) UPIU informing the external host of a ready to receive data condition and a response UPIU informing the external host of completion of a specific operation or the like. In an embodiment, the determination in S41 may be performed at or before the time when a header of the read data packet is transmitted.

When there is the message UPIU waiting to be transmitted as a result of the determination in S41, the memory controller may transmit the read data packet generated in S40 to the host interface as a first traffic class (S42). In addition, the memory controller may transmit the message UPIU to the host interface as a second traffic class (S43). The second traffic class may have a higher priority than the first traffic class and may be defined in a different port than the first traffic class. For example, each of the first traffic class and the second traffic class may use different ports in a MIPI UniPro included in the host interface.

Therefore, the host interface may transmit the message UPIU, received as the second traffic class, to the host, while transmitting the read data packet to the host (S44). The read data packet and the message UPIU may be transmitted to the host through one (1) channel. Therefore, the message UPIU may be transmitted to the host before the transmission of the read data packet is completed in operation S45. After receiving the message UPIU, the host may control the memory system in response to the message UPIU before the reception of the read data packet is completed. When no message UPIU is present as a result of the determination in S41, the memory controller may transmit the read data packet generated in S40 to the external host without a separate additional operation (S46).

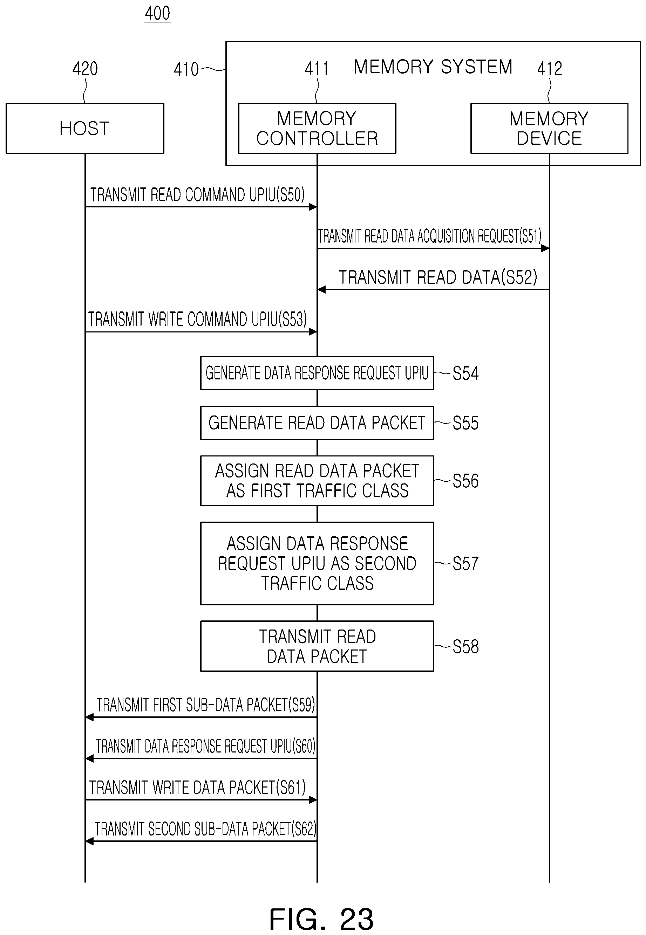

FIG. 23 is a diagram illustrating an operation of an electronic device including a memory system according to an embodiment of the present disclosure.

Referring to FIG. 23, a memory system 410 according to an embodiment of the present disclosure may include a memory controller 411 and a memory device 412. The memory system 410 may be included in an electronic device 400, together with a host 420. For example, the memory system 410 may be a UFS device and the electronic device 400 may be a device connected to the UFS device to store data in the UFS device or read the data stored in the UFS device, to execute a predetermined function.

An operation of the electronic device 400 may begin with the host 420 transmitting a read command UPIU to the memory system 410 (S50). The host 420 may transmit the read command UPIU to the memory controller 411 to acquire data stored in the memory system 410, and the memory controller 411 may acquire read data stored in the memory device 412 in response to the read command UPIU.

For example, the memory controller 411 may transmit a read data acquisition request to the memory device 412 (S51). The read data acquisition request may include address data indicating an address in which data to be acquired from the memory device 412 by the memory controller 411 is stored. The memory device 412 may transmit the read data to the memory controller 411 with reference to the address data included in the read data acquisition request (S52).

The host 420 may transmit a write command UPIU to the memory system 410 (S53). Depending on an embodiment, an order of S50 to S53 may be changed. For example, the write command UPIU may be transmitted earlier than the read command UPIU or the write command UPIU may be received from the host 420 while the memory controller 411 acquires the read data from the memory device 412. Upon receiving the write command UPIU, the memory controller 411 may generate a data response request UPIU to inform the host 420 that data is ready to be received (S54). In addition, the memory controller 411 may use the read data read from the memory device 412 to generate a read data packet (S55). A size of the read data packet may be determined by the memory controller 411.

The memory controller 411 may assign the read data packet as a first traffic class (S56) and may assign the data response request UPIU as a second traffic class having a higher priority than the first traffic class (S57), to advance a transmission point in time of the data response request UPIU generated in S54. The host interface of the memory controller 411 may transmit the read data packet, first received, to the host 420 (S58 & S59) and may then receive a data response request UPIU assigned a relatively high priority (S60). Therefore, before the transmission of the read data packet is completed (S58), the data response request UPIU may be preferentially transmitted to the host 420 (S60). Upon receiving the data response request UPIU, the host 420 may transmit a write data packet to the memory system 410 (S61). After the transmission of the data response request UPIU is completed, the memory controller 411 may transmit a remaining portion of the read data packet to the host 420 (S62). Therefore, in an embodiment of the present disclosure, before the host 420 receives the data response request UPIU and transmission of the read data packet is completed, the host 420 may transmit the write data packet to the memory system 410. In addition, performance in transmitting data between the memory system 410 and the host 420 may be improved.

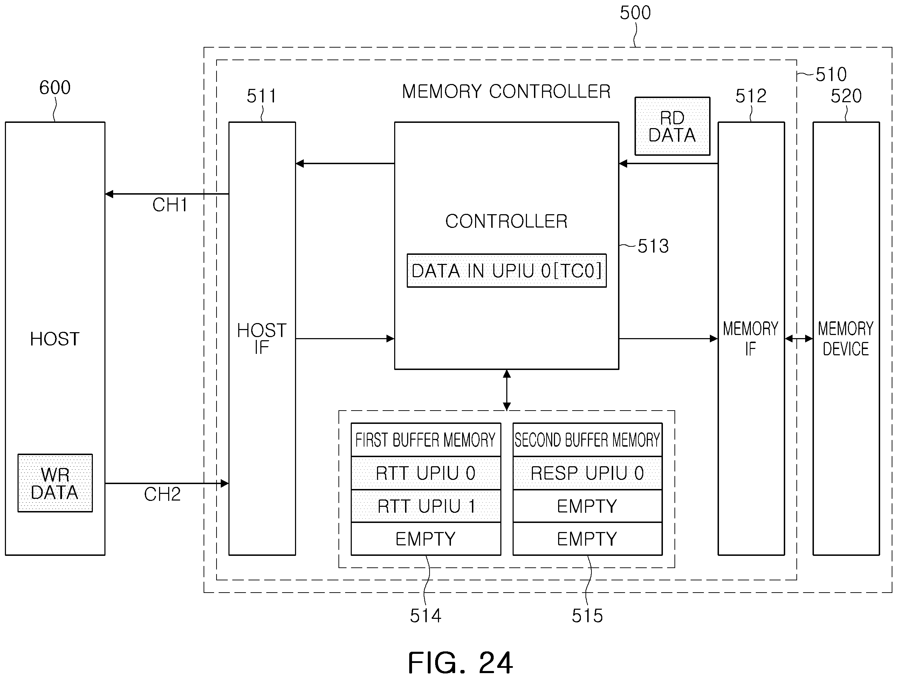

FIGS. 24 to 30 are diagrams illustrating an operation of a memory system according to an embodiment of the present disclosure.

First, referring to FIG. 24, a memory system 500 may include a memory controller 510 and a memory device 520 and may operate in conjunction with a host 600. The memory controller 510 may include a host interface 511, a memory interface 512, a controller 513, and buffer memories 514 and 515. The memory controller 510 may exchange data with the host 600 through the host interface 511 and may exchange data with the memory device 520 through the memory interface 512. The memory controller 510 may store a message UPIU, required for an operation of the memory system 500, in the buffer memories 514 and 515.

The host interface 511 may exchange data with the host 600 through a first channel CH1 and a second channel CH2. The memory system 500 may separately provide the first channel CH1 and the second channel CH2, to receive data from the host 600 and transmit data to the host 600 at the same time.

The host interface 511 and the controller 513 may exchange data through a plurality of traffic classes. For example, the host interface 511 and the controller 513 may exchange data through a first traffic class and a second traffic class having a higher priority than the first traffic class. The host interface 511 may record traffic class information in data output to the host 600, to distinguish between data received as the first traffic class and data received as the second traffic class. When the host interface 511 receives the data as the second traffic class while outputting the data received as the first traffic class to the host 600, the data received as the second traffic class may be first output to the host 600. For example, the traffic class information may be recorded in the form of a flag.

The host 600 may separately receive data to which the first traffic class is assigned and data to which the second traffic class is assigned. For example, with reference to data received through one (1) first channel CH1, the host 600 may acquire the data assigned as the first traffic class and the data assigned as the second traffic class, from the data transmitted through the first channel CH1, respectively.

When receiving a read command UPIU from the host 600, the memory controller 510 may acquire read data RD DATA from the memory device 520 through the memory interface 512 and may generate a read data packet DATA IN UPIU 0. A first traffic class TC0 may be assigned to the read data packet DATA IN UPIU 0. For example, a minimum size of the read data packet DATA IN UPIU 0 may be 4 KB, and a maximum size of the read data packet DATA IN UPIU 0 may be 32 KB.

Since the host 600 and the memory system 500 may simultaneously send and receive signals through the first channel CH1 and the second channel CH2, the host 600 may prepare write data WR DATA to be written to the memory system 500. The write data WR DATA may be transmitted to the memory system 500 through the second channel CH2.

After receiving a first Ready-To-Transfer UPIU RTT UPIU 0 from the memory system 500, the host 600 may transmit the write data WR DATA to the memory system 500. Messages UPIU including the first Ready-To-Transfer UPIU RTT UPIU 0 may be transmitted from the memory system 500 to the host 600 through the first channel CH1. Therefore, while the read data packet DATA IN UPIU 0 is being transmitted, the host 600 may not receive the messages UPIU and an operation using the second channel CH2 such as transmission of the write data WR DATA may be delayed.

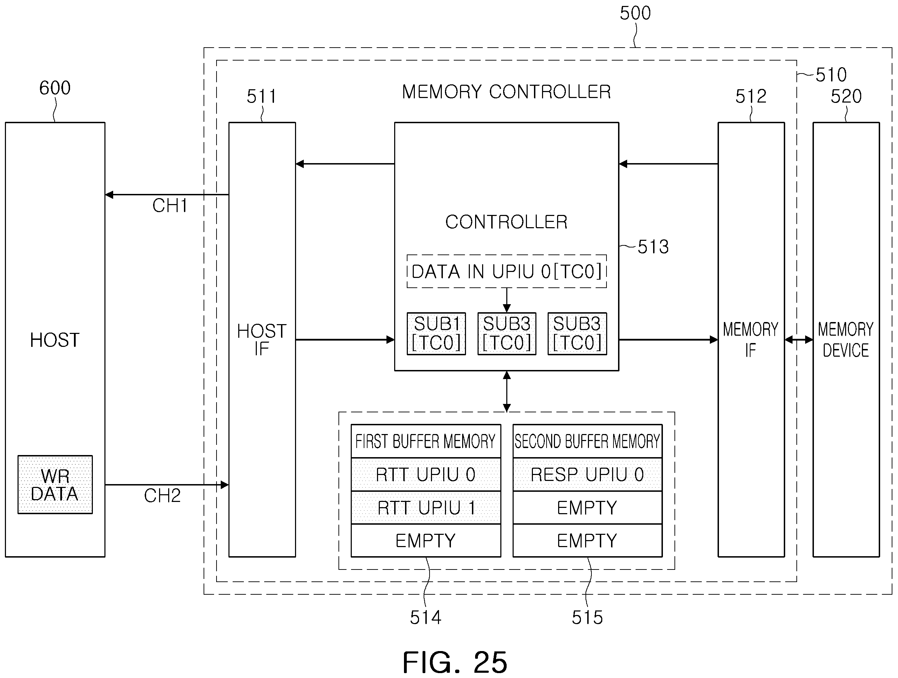

In an embodiment of the present disclosure, in order to solve the above problem, when the messages UPIU exist, the memory controller 510 may first transmit at least one of the messages UPIU to the host 600 before completing the transmission of the read data packet DATA IN UPIU 0. In the embodiment described with reference to FIGS. 24 to 30, a traffic class having a higher priority than the read data packet DATA IN UPIU 0 may be assigned to the messages UPIU, such that the host interface 511 may be controlled to complete transmission of at least one of the messages UPIU. Referring to FIG. 25, the controller 513 may assign the read data packet DATA IN UPIU 0 as the first traffic class TC0, and the first Ready-To-Transfer UPIU RTT UPIU 0 that may be a message UPIU acquired from the first buffer memory 514 may be assigned as a second traffic class TC1. The second traffic class TC1 may have a higher priority than the first traffic class TC0, and data assigned as the first traffic class TC0 and the second traffic class TC1 may be input to the host interface 511 through different ports.

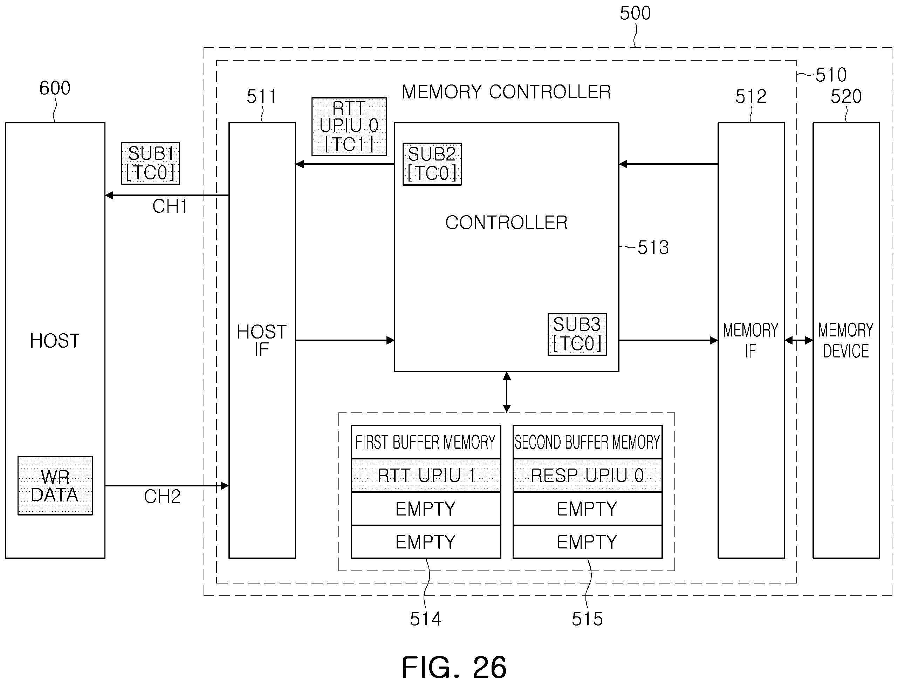

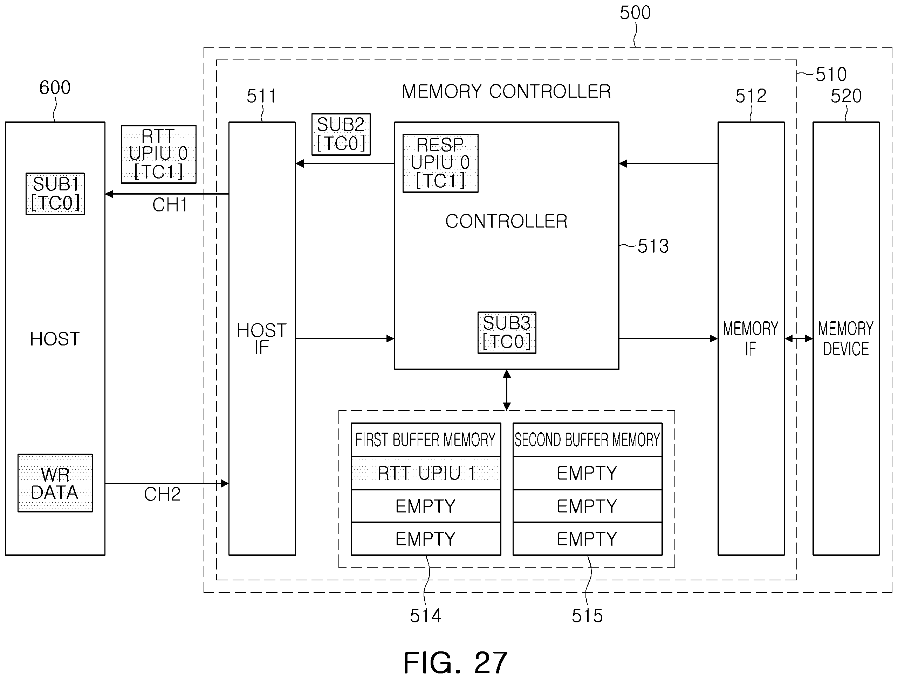

Next, referring to FIG. 26, the memory controller 510 may transmit the read data packet DATA IN UPIU 0 and the first Ready-To-Transfer UPIU RTT UPIU 0 to the host interface 511. The host interface 511 may transmit the read data packet DATA IN UPIU 0 and the first Ready-To-Transfer UPIU RTT UPIU 0 to the host 600 through the first channel CH1, according to an order of reception. When the read data packet DATA IN UPIU 0 is received before the first Ready-To-Transfer UPIU RTT UPIU 0, even before the transmission of the read data packet DATA IN UPIU 0 is completed, as illustrated in FIG. 27, the first Ready-To-Transfer UPIU RTT UPIU 0 may be sent to the host 600.

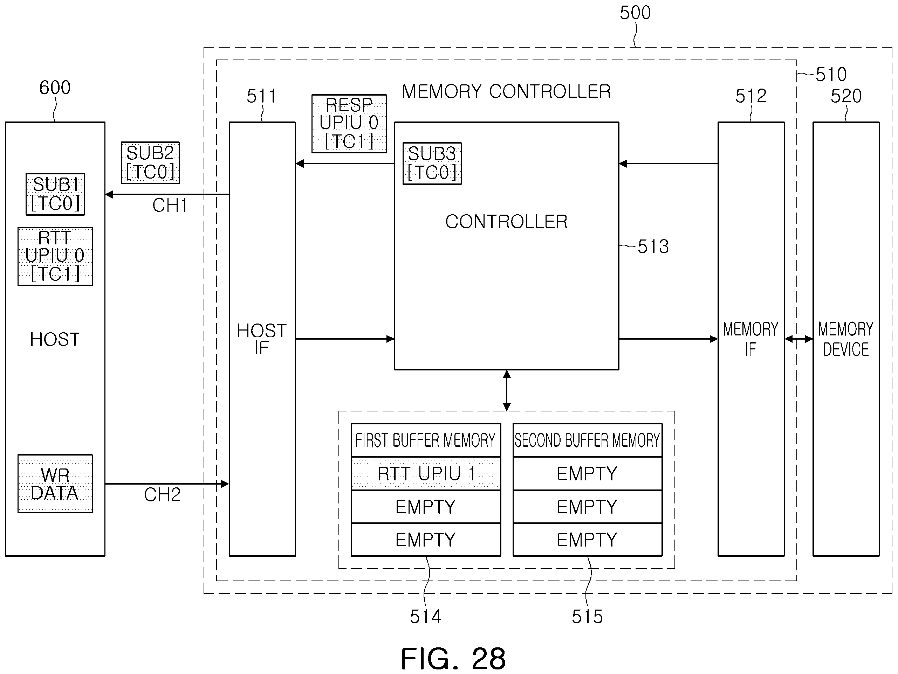

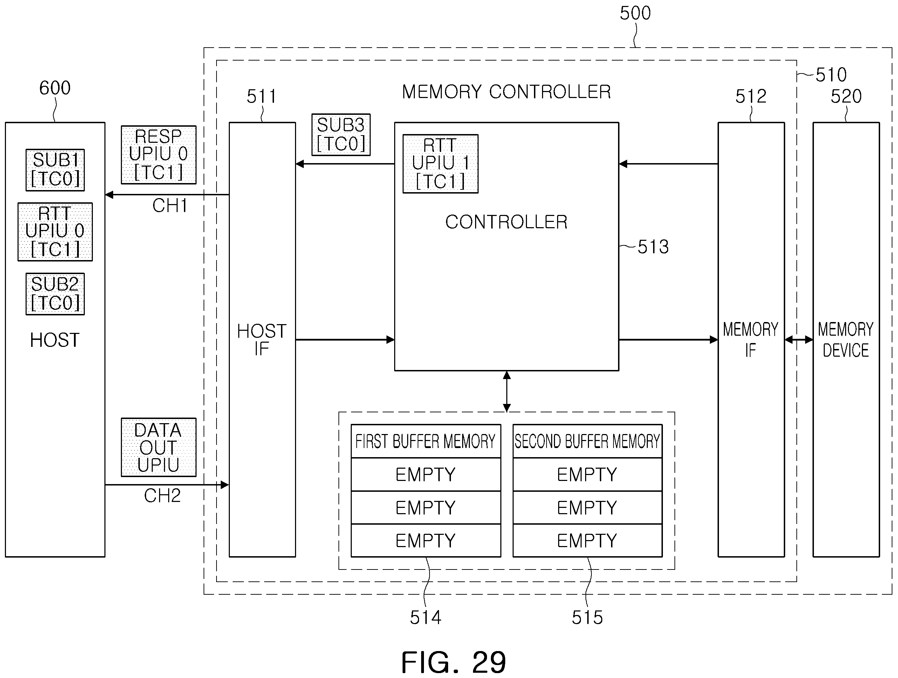

Referring to FIGS. 28 and 29, the host 600 receiving a first Ready-To-Transfer UPIU RTT UPIU 0 may determine that the memory system 500 is ready to receive data and may generate and transmit a write data packet DATA OUT UPIU to the memory system 500. The write data packet DATA OUT UPIU may be transmitted to the memory system 500 through the second channel CH2. Therefore, while the read data packet DATA IN UPIU 0 may be transmitted through the first channel CH1, the write data packet DATA OUT UPIU may be simultaneously transmitted through the second channel CH2. In addition, the controller 513 may acquire a response UPIU RESP UPIU stored in the second buffer memory 515, and may transmit the response UPIU RESP UPIU to the host interface 511 as the second traffic class TC1.

Referring to FIG. 29, the host interface 511 may receive the response UPIU RESP UPIU to which the second traffic class TC1 is assigned, from the controller 513, before the transmission of the read data packet DATA IN UPIU 0 is completed. Therefore, the host interface 511 may first transmit the response UPIU RESP UPIU to the host 600, before the transmission of the read data packet DATA IN UPIU 0 is completed.

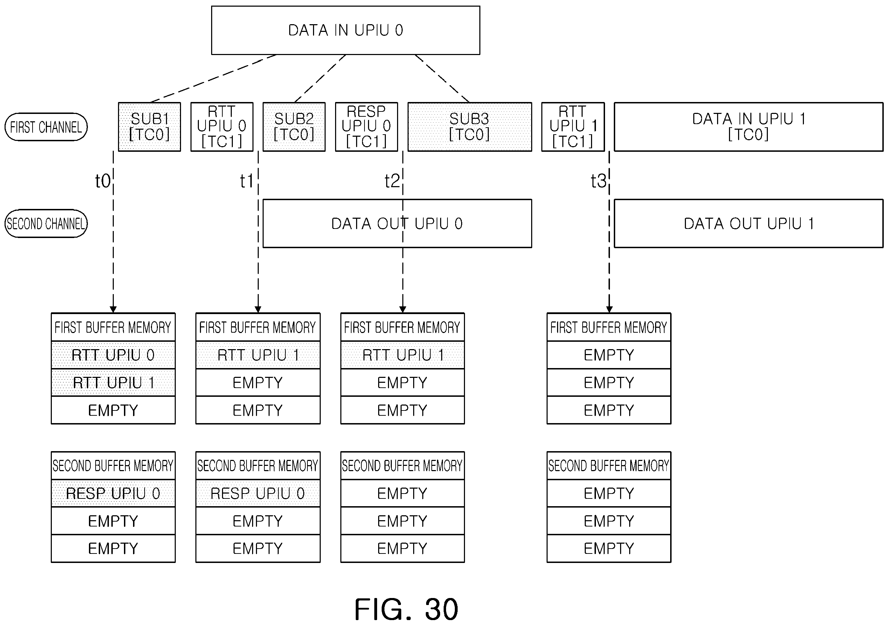

FIG. 30 is a diagram illustrating a transmission order of UPIU through a first channel and a second channel. Referring to FIG. 30, messages UPIU may exist in both a first buffer memory and a second buffer memory. A memory controller may assign read data packets to a first traffic class TC0 and may assign the messages UPIU as a second traffic class TC1 having a higher priority than the first traffic class TC0.

In an embodiment illustrated in FIG. 30, a host interface may receive a first read data packet DATA IN UPIU 0 through the first traffic class TC0 at a start point in time to and may start to output the first read data packet DATA IN UPIU 0 to the host through a first channel. Thereafter, when the memory controller assigns a first Ready-To-Transfer UPIU RTT UPIU 0 as the second traffic class TC1, the host interface may send the first Ready-To-Transfer UPIU RTT UPIU 0 to the host before the transmission of the first read data packet DATA IN UPIU 0 is completed. Therefore, the host may receive the first Ready-To-Transfer UPIU RTT UPIU 0 at a first point in time t1 and may transmit a first write data packet DATA OUT UPIU 0 to a memory system through a second channel.

When the memory controller assigns a response request UPIU RESP UPIU 0 as the second traffic class TC1 while the host interface outputs the first read data packet DATA IN UPIU 0 after the first point in time t1, the host interface may first send the response request UPIU RESP UPIU 0 to the host. Transmission of the first read data packet DATA IN UPIU 0 may be restarted after a second point in time t2.

The memory controller may also assign a second Ready-To-Transfer UPIU RTT UPIU 1 as the second traffic class TC1. In the embodiment illustrated in FIG. 30, after the host interface completes the transmission of the first read data packet DATA IN UPIU 0, the second Ready-To-Transfer UPIU RTT UPIU 1 may be sent to the host interface through a port of the second traffic class TC1. The host interface may first output the second Ready-To-Transfer UPIU RTT UPIU 1, received through a port having a higher priority, to the host, even though the second read data packet DATA IN UPIU 1 was received first. The messages UPIU may not exist in the buffer memories after a third point in time t3, when the second Ready-To-Transfer UPIU RTT UPIU 1 is transmitted to the host interface.

In the embodiment illustrated in FIG. 30, when the host interface receives the messages UPIU to which the second traffic class TC1 is assigned while the first read data packet DATA IN UPIU 0 is transmitted through the first channel, the messages UPIU may be preferentially transmitted to the host through the first channel. As an example, as illustrated in FIG. 30, the transmission of a message UPIU such as a first Ready-To-Transfer UPIU RTT UPIU 0 may be completed before transmission of the first read data packet DATA IN UPIU 0 is completed. Therefore, while the first read data packet DATA IN UPIU 0 is transmitted through the first channel, the first write data packet DATA OUT UPIU 0 may be simultaneously transmitted through the second channel and performance in transmitting data between the host and the memory system may be improved.

Information of the traffic classes TC0 and TC1 may be recorded in header areas of read data packets and messages UPIU, respectively. For example, the host interface may use information of the first traffic class TC0 recorded in the header area of the second read data packet DATA IN UPIU 1 and information of the second traffic class TC1 recorded in the header area of the second Ready-To-Transfer UPIU RTT UPIU 1 to confirm if the second Ready-To-Transfer UPIU RTT UPIU 1 has been transmitted to the port having a higher priority and may first send the second Ready-To-Transfer UPIU RTT UPIU 1 to the host. Also, the host may distinguish and process read data packets and messages UPIU by referring to the header areas of read data packets and messages UPIU, successively received through the first channel.

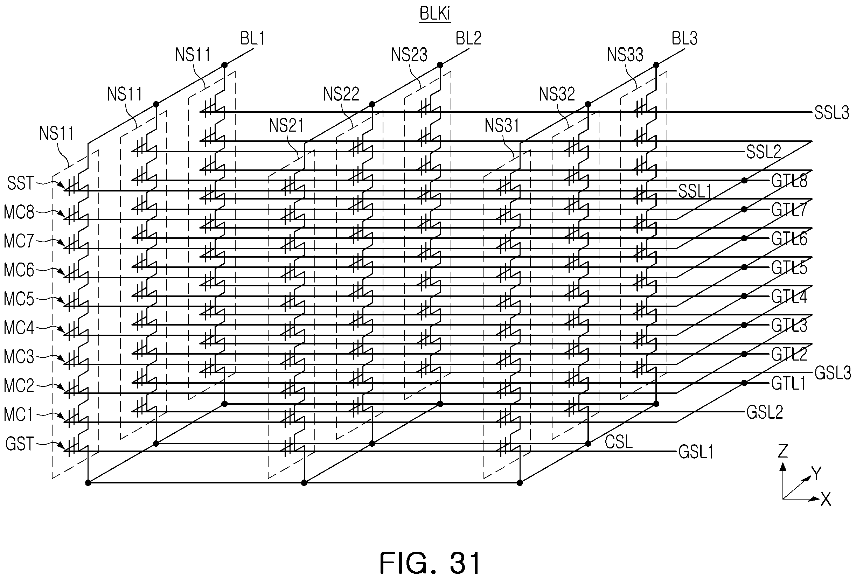

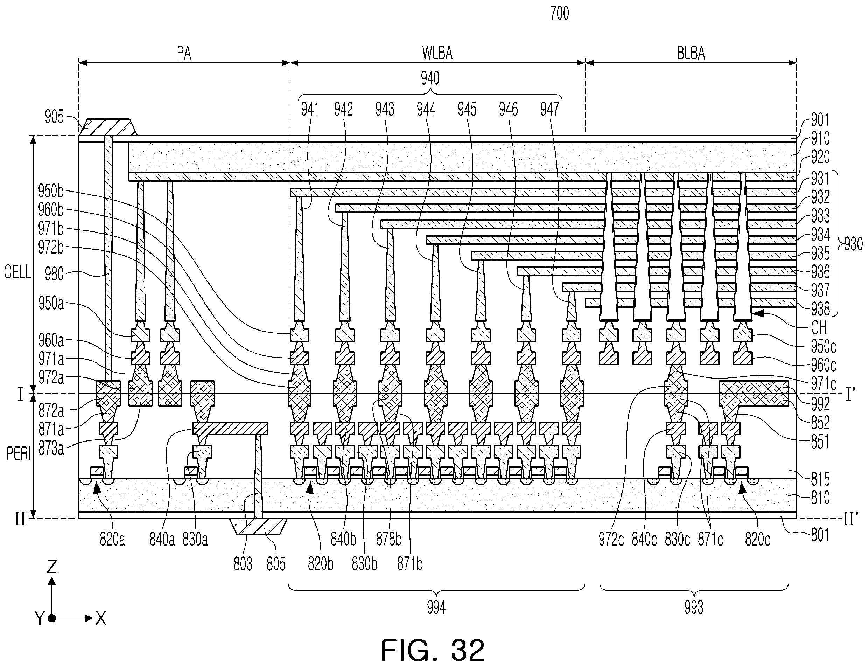

FIGS. 31 and 32 are diagrams illustrating a memory device applicable to a memory system according to an embodiment of the present disclosure.

First, FIG. 31 is a diagram of a 3D V-NAND structure applicable to a UFS device according to an embodiment. When a storage module of the UFS device is implemented as a 3D V-NAND flash memory, each of a plurality of memory blocks included in the storage module may be represented by an equivalent circuit illustrated in FIG. 31.

A memory block BLKi illustrated in FIG. 31 may refer to a 3D memory block having a 3D structure formed on a substrate. For example, a plurality of memory NAND strings included in the memory block BLKi may be formed in a vertical direction to the substrate.

Referring to FIG. 31, the memory block BLKi may include a plurality of memory NAND strings NS11 to NS13, NS21 to NS23, and NS31 to NS33, which are connected between bit lines BL1, BL2, and BL3 and a common source line CSL. Each of the memory NAND strings NS11 to NS13, NS21 to NS23, and NS31 to NS33 may include a string selection transistor SST, a plurality of memory cells MC1, MC2, ..., and MC8, and a ground selection transistor GST. Each of the memory NAND strings NS11 to NS13, NS21 to NS23, and NS31 to NS33 is illustrated as including eight memory cells MC1, MC2, ..., and MC8 in FIG. 31, without being limited thereto.

The string selection transistor SST may be connected to string selection lines SSL1, SSL2, and SSL3 corresponding thereto. Each of the memory cells MC1, MC2, ..., and MC8 may be connected to a corresponding one of gate lines GTL1, GTL2, ..., and GTL8. The gate lines GTL1, GTL2, ..., and GTL8 may respectively correspond to word lines, and some of the gate lines GTL1, GTL2, ..., and GTL8 may correspond to dummy word lines. The ground selection transistor GST may be connected to ground selection lines GSL1, GSL2, and GSL3 corresponding thereto. The string selection transistor SST may be connected to the bit lines BL1, BL2, and BL3 corresponding thereto, and the ground selection transistor GST may be connected to the common source line CSL.

Word lines (e.g., WL1) at the same level may be connected in common, and the ground selection lines GSL1, GSL2, and GSL3 and the string selection lines SSL1, SSL2, and SSL3 may be separated from each other. FIG. 31 illustrates a case in which a memory block BLK is connected to eight (8) gate lines GTL1, GTL2, ..., and GTL8 and three (3) bit lines BL1, BL2, and BL3, without being limited thereto.

FIG. 32 is a diagram illustrating a BVNAND structure applicable to a memory device of a memory system according to an embodiment of the present disclosure. Referring to FIG. 32, a memory device 700 may have a chip-to-chip (C2C) structure. The C2C structure may refer to a structure formed by manufacturing an upper chip including a cell region CELL on a first wafer, manufacturing a lower chip including a peripheral circuit region PERI on a second wafer, different from the first wafer, and then bonding the upper chip and the lower chip to each other. In this case, the bonding process may include a method of electrically connecting a bonding metal formed on a lowermost metal layer of the upper chip and a bonding metal formed on an uppermost metal layer of the lower chip. For example, when the bonding metals include copper (Cu), using a Cu-to-Cu bonding. The embodiment, however, is not limited thereto. For example, the bonding metals may also be formed of aluminum (Al) or tungsten (W).

Each of the peripheral circuit region PERI and the cell region CELL of the memory device 700 may include an external pad bonding area PA, a word line bonding area WLBA, and a bit line bonding area BLBA.

The peripheral circuit region PERI may include a first substrate 810, an interlayer insulating layer 815, a plurality of circuit elements 820a, 820b, and 820c formed on the first substrate 810, first metal layers 830a, 830b, and 830c respectively connected to the plurality of circuit elements 820a, 820b, and 820c, and second metal layers 840a, 840b, and 840c formed on the first metal layers 830a, 830b, and 830c. In an embodiment, the first metal layers 830a, 830b, and 830c may be formed of tungsten having relatively high electrical resistivity, and the second metal layers 840a, 840b, and 840c may be formed of copper having relatively low electrical resistivity.

In the specification, although only the first metal layers 830a, 830b, and 830c and the second metal layers 840a, 840b, and 840c are illustrated and described, the embodiment is not limited thereto, and one or more additional metal layers may be further formed on the second metal layers 840a, 840b, and 840c. At least a portion of the one or more additional metal layers formed on the second metal layers 840a, 840b, and 840c may be formed of aluminum or the like having a lower electrical resistivity than those of copper forming the second metal layers 840a, 840b, and 840c.

The interlayer insulating layer 815 may be disposed on the first substrate 810 and cover the plurality of circuit elements 820a, 820b, and 820c, the first metal layers 830a, 830b, and 830c, and the second metal layers 840a, 840b, and 840c. The interlayer insulating layer 815 may include an insulating material such as silicon oxide, silicon nitride, or the like.

Lower bonding metals 871b and 872b may be formed on the second metal layer 840b in the word line bonding area WLBA. In the word line bonding area WLBA, the lower bonding metals 871b and 872b in the peripheral circuit region PERI may be electrically bonded to upper bonding metals 971b and 972b of the cell region CELL. The lower bonding metals 871b and 872b and the upper bonding metals 971b and 972b may be formed of aluminum, copper, tungsten, or the like.

The cell region CELL may include at least one memory block. The cell region CELL may include a second substrate 910 and a common source line 920. On the second substrate 910, a plurality of word lines 931 to 938 (i.e., 930) may be stacked in a direction (a Z-axis direction), perpendicular to an upper surface of the second substrate 910. At least one string select line and at least one ground select line may be arranged on and below the plurality of word lines 930, respectively, and the plurality of word lines 930 may be disposed between the at least one string select line and the at least one ground select line.

In the bit line bonding area BLBA, a channel structure CH may extend in a direction (a Z-axis direction), perpendicular to the upper surface of the second substrate 910, and pass through the plurality of word lines 930, the at least one string select line, and the at least one ground select line. The channel structure CH may include a data storage layer, a channel layer, a buried insulating layer, and the like, and the channel layer may be electrically connected to a first metal layer 950c and a second metal layer 960c. For example, the first metal layer 950c may be a bit line contact, and the second metal layer 960c may be a bit line. In an embodiment, the bit line 960c may extend in a first direction (a Y-axis direction), parallel to the upper surface of the second substrate 910.

In an embodiment illustrated in FIG. 32, an area in which the channel structure CH, the bit line 960c, and the like are disposed may be defined as the bit line bonding area BLBA. In the bit line bonding area BLBA, the bit line 960c may be electrically connected to the circuit elements 820c providing a page buffer 993 in the peripheral circuit region PERI. The bit line 960c may be connected to upper bonding metals 971c and 972c in the cell region CELL, and the upper bonding metals 971c and 972c may be connected to lower bonding metals 871c and 872c connected to the circuit elements 820c of the page buffer 993.

In the word line bonding area WLBA, the word lines 930 may extend in a second direction (an X-axis direction), parallel to the upper surface of the second substrate 910 and perpendicular to the first direction, and may be connected to a plurality of cell contact plugs 941 to 947 (i.e., 940). The plurality of word lines 930 and the plurality of cell contact plugs 940 may be connected to each other in pads provided by at least a portion of the plurality of word lines 930 extending in different lengths in the second direction. A first metal layer 950b and a second metal layer 960b may be connected to an upper portion of the plurality of cell contact plugs 940 connected to the plurality of word lines 930, sequentially. The plurality of cell contact plugs 940 may be connected to the peripheral circuit region PERI by the upper bonding metals 971b and 972b of the cell region CELL and the lower bonding metals 871b and 872b of the peripheral circuit region PERI in the word line bonding area WLBA.

The plurality of cell contact plugs 940 may be electrically connected to the circuit elements 920b forming a row decoder 994 in the peripheral circuit region PERI. In an embodiment, operating voltages of the circuit elements 820b of the row decoder 994 may be different than operating voltages of the circuit elements 820c forming the page buffer 993. For example, operating voltages of the circuit elements 820c forming the page buffer 993 may be greater than operating voltages of the circuit elements 820b forming the row decoder 994.

A common source line contact plug 980 may be disposed in the external pad bonding area PA. The common source line contact plug 980 may be formed of a conductive material such as a metal, a metal compound, polysilicon, or the like, and may be electrically connected to the common source line 920. A first metal layer 950a and a second metal layer 960a may be stacked on an upper portion of the common source line contact plug 980, sequentially. For example, an area in which the common source line contact plug 980, the first metal layer 950a, and the second metal layer 960a are disposed may be defined as the external pad bonding area PA.

Input-output pads 805 and 905 may be disposed in the external pad bonding area PA. Referring to FIG. 32, a lower insulating film 801 covering a lower surface of the first substrate 810 may be formed below the first substrate 810, and a first input-output pad 805 may be formed on the lower insulating film 801. The first input-output pad 805 may be connected to at least one of the plurality of circuit elements 820a, 820b, and 820c disposed in the peripheral circuit region PERI through a first input-output contact plug 803, and may be separated from the first substrate 810 by the lower insulating film 801. In addition, a side insulating film may be disposed between the first input-output contact plug 803 and the first substrate 810 to electrically separate the first input-output contact plug 803 and the first substrate 810.

Referring to FIG. 32, an upper insulating layer 901 covering the upper surface of the second substrate 910 may be formed on the second substrate 910, and a second input-output pad 905 may be disposed on the upper insulating layer 901. The second input-output pad 905 may be connected to at least one of the plurality of circuit elements 820a, 820b, and 820c disposed in the peripheral circuit region PERI through a second input-output contact plug 903.

According to embodiments, the second substrate 910 and the common source line 920 may not be disposed in an area in which the second input-output contact plug 903 is disposed. Also, the second input-output pad 905 may not overlap the word lines 930 in the third direction (the Z-axis direction). Referring to FIG. 32, the second input-output contact plug 903 may be separated from the second substrate 910 in a direction, parallel to the upper surface of the second substrate 910, and may pass through the interlayer insulating layer 815 of the cell region CELL to be connected to the second input-output pad 905.

According to embodiments, the first input-output pad 805 and the second input-output pad 905 may be selectively formed. For example, the memory device 700 may include only the first input-output pad 805 disposed on the first substrate 810 or the second input-output pad 905 disposed on the second substrate 910. Alternatively, the memory device 700 may include both the first input-output pad 805 and the second input-output pad 905.

A metal pattern provided on an uppermost metal layer may be provided as a dummy pattern or the uppermost metal layer may be absent, in each of the external pad bonding area PA and the bit line bonding area BLBA, respectively included in the cell region CELL and the peripheral circuit region PERI.

In the external pad bonding area PA, the memory device 700 may include a lower metal pattern 873a, corresponding to an upper metal pattern 972a formed in an uppermost metal layer of the cell region CELL, and have the same cross-sectional shape as the upper metal pattern 972a of the cell region CELL so as to be connected to each other in an uppermost metal layer of the peripheral circuit region PERI. In the peripheral circuit region PERI, the lower metal pattern 873a formed in the uppermost metal layer of the peripheral circuit region PERI may not be connected to a contact. Similarly, in the external pad bonding area PA, an upper metal pattern 972a, corresponding to the lower metal pattern 873a formed in an uppermost metal layer of the peripheral circuit region PERI, may have the same shape as a lower metal pattern 873a of the peripheral circuit region PERI and may be formed in an uppermost metal layer of the cell region CELL.

The lower bonding metals 871b and 872b may be formed on the second metal layer 840b in the word line bonding area WLBA. In the word line bonding area WLBA, the lower bonding metals 871b and 872b of the peripheral circuit region PERI may be electrically connected to the upper bonding metals 971b and 972b of the cell region CELL by a bonding.

Further, in the bit line bonding area BLBA, an upper metal pattern 992, corresponding to a lower metal pattern 852 formed in the uppermost metal layer of the peripheral circuit region PERI, may have the same cross-sectional shape as the lower metal pattern 852 of the peripheral circuit region PERI and may be formed in an uppermost metal layer of the cell region CELL. A contact may not be formed on the upper metal pattern 992 formed in the uppermost metal layer of the cell region CELL.

According to an embodiment of the present disclosure, a memory system may determine whether there is another message UPIU to be transmitted to a host, before or at the time of outputting a read data packet to the host, and, when the message UPIU is present, the memory system may transmit preferentially the message UPIU to the host before transmission of the read data packet is completed. Therefore, the host quickly receiving the message UPIU may start an operation such as transmitting a write data packet to the memory system, or the like, and performance in transmitting data between the host and the memory system may be improved.

As is traditional in the field, embodiments may be described and illustrated in terms of blocks which carry out a described function or functions. These blocks, which may be referred to herein as units or modules or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware and/or software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure. An aspect of an embodiment may be achieved through instructions stored within a non-transitory storage medium and executed by a processor.

Various advantages and effects of the present disclosure are not limited to the above-described contents, and may be more easily understood in describing specific embodiments of the present disclosure.

## Claims

1. A memory system (1, 2, 110, 200, 410, 500) comprising:
a memory device (50, 112, 220, 412, 520, 700);
a buffer memory (214, 215, 514, 515) configured to store at least one of a Ready-To-Transfer, RTT, Universal Flash Storage-Protocol-Information-Unit, UPIU, and a response UPIU and implemented separately from the memory device (50, 112, 220, 412, 520, 700); and
a memory controller (60, 111, 210, 411, 510) configured to acquire read data from the memory device (50, 112, 220, 412, 520, 700) in response to a read request received from an external host (10, 120, 300, 420, 600) and transmit a read data packet including the read data to the external host (10, 120, 300, 420, 600),
wherein when the at least one of the RTT UPIU and the response UPIU stored in the buffer memory (214, 215, 514, 515) is present and when a size of the read data packet is equal to a minimum size of a read data packet that can be transmitted from the memory system (1, 2, 110, 200, 410, 500) to the external host (10, 120, 300, 420, 600), the memory controller (60, 111, 210, 411, 510) sends the at least one of the RTT UPIU and the response UPIU to the external host (10, 120, 300, 420, 600) after transmission of the read data packet is completed,
wherein, when the at least one of the RTT UPIU and the response UPIU stored in the buffer memory is present and when a size of the read data packet is greater than the minimum size of a read data packet that can be transmitted from the memory system (1, 2, 110, 200, 410, 500) to the external host (10, 120, 300, 420, 600), the memory controller divides the read data packet into a first sub-data packet and a second sub-data packet and sends the at least one of the RTT UPIU and the response UPIU to the external host (10, 120, 300, 420, 600), alternately between the first sub-data packet and the second sub-data packet, and wherein the size of the first sub-data packet is the minimum size that can be transmitted from the memory system (1, 2, 110, 200, 410, 500) to the external host (10, 120, 300, 420, 600).

2. The memory system (1, 2, 110, 200, 410, 500) of claim 1, wherein the buffer memory (214, 215, 514, 515) includes a first buffer memory (214, 514) storing the Ready-To-Transfer UPIU and a second buffer memory (215, 515) storing the response UPIU.

3. The memory system (1, 2, 110, 200, 410, 500) of claim 1 or 2, wherein a size of the first sub-data packet is different from a size of the second sub-data packet.

4. The memory system (1, 2, 110, 200, 410, 500) of any one of the preceding claims, wherein the memory controller (60, 111, 210, 411, 510) comprises a host interface (211, 511) including a first channel (CH1) transmitting data to the external host (10, 120, 300, 420, 600) and a second channel (CH2) receiving data from the external host (10, 120, 300, 420, 600).

5. The memory system (1, 2, 110, 200, 410, 500) of claim 4, wherein after the RTT UPIU is transmitted to the external host (10, 120, 300, 420, 600) through the first channel (CH1), the host interface (211, 511) outputs the read data packet through the first channel (CH1) and receives a write data packet from the external host (10, 120, 300, 420, 600) through the second channel (CH2), simultaneously.

6. The memory system (1, 2, 110, 200, 410, 500) of claim 5, wherein the memory controller (60, 111, 210, 411, 510) writes write data included in the write data packet to the memory device (50, 112, 220, 412, 520, 700).

7. The memory system (1, 2, 110, 200, 410, 500) of any one of claims 4 to 6, wherein the memory controller (60, 111, 210, 411, 510) transmits the read data packet to the host interface (211, 511) as a first traffic class and transmits the at least one of the RTT UPIU and the response UPIU to the host interface (211, 511) as a second traffic class having a higher priority than the first traffic class.

8. The memory system (1, 2, 110, 200, 410, 500) of claim 7, wherein the memory controller (60, 111, 210, 411, 510) writes information of the first traffic class to the read data packet and writes information of the second traffic class to the at least one of the RTT UPIU and the response UPIU.

## Patentansprüche

1. Speichersystem (1, 2, 110, 200, 410, 500), aufweisend:
eine Speichervorrichtung (50, 112, 220, 412, 520, 700);
einen Bufferspeicher (214, 215, 514, 515), der dafür ausgelegt ist, zumindest eines von einer Ready-to-Transfer-, RTT-, Universal-Flash-Storage-Protocol-Information Unit, UPIU, sowie eine Response-UPIU zu speichern und der separat von der Speichervorrichtung (50, 112, 220, 412, 520, 700) vorhanden ist; und
einen Speichercontroller (60, 111, 210, 411, 510), der dafür ausgelegt ist, Lesedaten von der Speichervorrichtung (50, 112, 220, 412, 520, 700) als Reaktion auf eine Leseanfrage, die von einem externen Host (10, 120, 300, 420, 600) empfangen wird, zu erhalten, und ein Lesedatenpaket einschließlich der Lesedaten an den externen Host (10, 120, 300, 420, 600) zu senden,
wobei, wenn zumindest eines von der in dem Bufferspeicher (214, 215, 514, 515) gespeicherten RTT-UPIU und der Response-UPIU vorhanden ist und wenn eine Größe des Lesedatenpakets einer Mindestgröße eines Lesedatenpakets entspricht, das von dem Speichersystem (1, 2, 110, 200, 410, 500) an den externen Host (10, 120, 300, 420, 600) gesendet werden kann, der Speichercontroller (60, 111, 210, 411, 510) das zumindest eine von der RTT-UPIU und der Response-UPIU an den externen Host (10, 120, 300, 420, 600) sendet, nachdem die Übertragung des Lesedatenpakets beendet ist,
wobei, wenn das zumindest eine von der in dem Bufferspeicher gespeicherten RTT-UPIU und der Response-UPIU vorhanden ist und wenn eine Größe des Lesedatenpakets größer als eine Mindestgröße eines Lesedatenpakets ist, das von dem Speichersystem (1, 2, 110, 200, 410, 500) an den externen Host (10, 120, 300, 420, 600) gesendet werden kann, der Speichercontroller das Lesedatenpaket in ein erstes Sub-Datenpaket und ein zweites Sub-Datenpaket aufteilt und das zumindest eine von der RTT-UPIU und der Response-UPIU abwechselnd zwischen dem ersten Sub-Datenpaket und dem zweiten Sub-Datenpaket an den externen Host (10, 120, 300, 420, 600) sendet, und wobei die Größe des ersten Sub-Datenpakets der Mindestgröße entspricht, die von dem Speichersystem (1, 2, 110, 200, 410, 500) an den externen Host (10, 120, 300, 420, 600) gesendet werden kann.

2. Speichersystem (1, 2, 110, 200, 410, 500) nach Anspruch 1, wobei der Bufferspeicher (214, 215, 514, 515) einen ersten Bufferspeicher (214, 514), der die Ready-to-Transfer-UPIU speichert, und einen zweiten Bufferspeicher (215, 515), der die Response-UPIU speichert, beinhaltet.

3. Speichersystem (1, 2, 110, 200, 410, 500) nach Anspruch 1 oder 2, wobei eine Größe des ersten Sub-Datenpakets sich von einer Größe des zweiten Sub-Datenpakets unterscheidet.

4. Speichersystem (1, 2, 110, 200, 410, 500) nach einem der vorangehenden Ansprüche, wobei der Speichercontroller (60, 111, 210, 411, 510) eine Host-Schnittstelle (211, 511) einschließlich eines ersten Kanals (CH1), der Daten an den externen Host (10, 120, 300, 420, 600) überträgt, und eines zweiten Kanals (CH2), der Daten von dem externen Host (10, 120, 300, 420, 600) empfängt, aufweist.

5. Speichersystem (1, 2, 110, 200, 410, 500) nach Anspruch 4, wobei nach dem Übertragen der RTT-UPIU an den externen Host (10, 120, 300, 420, 600) durch den ersten Kanal (CH1) die Host-Schnittstelle (211, 511) das Lesedatenpaket durch den ersten Kanal (CH1) ausgibt und gleichzeitig ein Schreibdatenpaket durch den zweiten Kanal (CH2) von dem externen Host (10, 120, 300, 420, 600) empfängt.

6. Speichersystem (1, 2, 110, 200, 410, 500) nach Anspruch 5, wobei der Speichercontroller (60, 111, 210, 411, 510) Schreibdaten, die in dem Schreibdatenpaket enthalten sind, in die Speichervorrichtung (50, 112, 220, 412, 520, 700) schreibt.

7. Speichersystem (1, 2, 110, 200, 410, 500) nach einem der Ansprüche 4 bis 6, wobei der Speichercontroller (60, 111, 210, 411, 510) das Lesedatenpaket an die Host-Schnittstelle (211, 511) als eine erste Traffic-Klasse überträgt und das zumindest eine von der RTT-UPIU und der Response-UPIU als eine zweite Traffic-Klasse mit einer höheren Priorität als die erste Traffic-Klasse an die Host-Schnittstelle (211, 511) überträgt.

8. Speichersystem (1, 2, 110, 200, 410, 500) nach Anspruch 7, wobei der Speichercontroller (60, 111, 210, 411, 510) Informationen der ersten Traffic-Klasse in das Lesedatenpaket schreibt und Informationen der zweiten Traffic-Klasse in das zumindest eine von der RTT-UPIU und der Response-UPIU schreibt.

## Revendications

1. Système de mémoire (1, 2, 110, 200, 410, 500) comprenant:
un dispositif de mémoire (50, 112, 220, 412, 520, 700);
une mémoire tampon (214, 215, 514, 515) configurée pour stocker au moins l'une d'une unité d'information du protocole Universal Flash Storage, UPIU [« Universal Flash Storage-Protocol-Information-Unit »], prête à être transférée, RTT [« Ready-To-Transfer »], et d'une UPIU de réponse, et réalisé séparément du dispositif de mémoire (50, 112, 220, 412, 520, 700); et
un contrôleur de mémoire (60, 111, 210, 411, 510) configuré pour acquérir des données de lecture à partir du dispositif de mémoire (50, 112, 220, 412, 520, 700) en réponse à une requête de lecture reçue d'un hôte externe (10, 120, 300, 420, 600) et transmettre un paquet de données de lecture comprenant les données de lecture à l'hôte externe (10, 120, 300, 420, 600),
dans lequel, lorsque l'UPIU RTT et/ou l'UPIU de réponse stockée(s) dans la mémoire tampon (214, 215, 514, 515) est(sont) présente(s) et lorsque la taille du paquet de données de lecture est égale à une taille minimale d'un paquet de données de lecture pouvant être transmis du système de mémoire (1, 2, 110, 200, 410, 500) à l'hôte externe (10, 120, 300, 420, 600), le contrôleur de mémoire (60, 111, 210, 411, 510) envoie l'UPIU RTT et/ou l'UPIU de réponse à l'hôte externe (10, 120, 300, 420, 600) après la fin de la transmission du paquet de données de lecture,
dans lequel, lorsque l'UPIU RTT et/ou de l'UPIU de réponse stockée(s) dans la mémoire tampon est(sont) présente(s) et lorsque la taille du paquet de données de lecture est supérieure à la taille minimale d'un paquet de données de lecture pouvant être transmis du système de mémoire (1, 2, 110, 200, 410, 500) à l'hôte externe (10, 120, 300, 420, 600), le contrôleur de mémoire divise le paquet de données de lecture en un premier sous-paquet de données et un second sous-paquet de données et envoie l'UPIU RTT et/ou l'UPIU de réponse à l'hôte externe (10, 120, 300, 420, 600), en alternance entre le premier sous-paquet de données et le second sous-paquet de données, la taille du premier sous-paquet de données étant la taille minimale pouvant être transmise du système de mémoire (1, 2, 110, 200, 410, 500) à l'hôte externe (10, 120, 300, 420, 600).

2. Système de mémoire (1, 2, 110, 200, 410, 500) selon la revendication 1, dans lequel la mémoire tampon (214, 215, 514, 515) comprend une première mémoire tampon (214, 514) stockant l'UPIU RTT et une seconde mémoire tampon (215, 515) stockant l'UPIU de réponse.

3. Système de mémoire (1, 2, 110, 200, 410, 500) selon la revendication 1 ou 2, dans lequel la taille du premier sous-paquet de données est différente de la taille du second sous-paquet de données.

4. Système de mémoire (1, 2, 110, 200, 410, 500) selon l'une quelconque des revendications précédentes, dans lequel le contrôleur de mémoire (60, 111, 210, 411, 510) comprend une interface hôte (211, 511) comprenant un premier canal (CH1) transmettant des données à l'hôte externe (10, 120, 300, 420, 600) et un second canal (CH2) recevant des données de l'hôte externe (10, 120, 300, 420, 600).

5. Système de mémoire (1, 2, 110, 200, 410, 500) selon la revendication 4, dans lequel, après que l'UPIU RTT a été transmise à l'hôte externe (10, 120, 300, 420, 600) par le premier canal (CH1), l'interface hôte (211, 511) émet le paquet de données de lecture par le premier canal (CH1) et reçoit simultanément un paquet de données d'écriture de l'hôte externe (10, 120, 300, 420, 600) par le second canal (CH2).

6. Système de mémoire (1, 2, 110, 200, 410, 500) selon la revendication 5, dans lequel le contrôleur de mémoire (60, 111, 210, 411, 510) écrit les données d'écriture incluses dans le paquet de données d'écriture dans le dispositif de mémoire (50, 112, 220, 412, 520, 700).

7. Système de mémoire (1, 2, 110, 200, 410, 500) selon l'une quelconque des revendications 4 à 6, dans lequel le contrôleur de mémoire (60, 111, 210, 411, 510) transmet le paquet de données de lecture à l'interface hôte (211, 511) en tant que première classe de trafic et transmet au moins l'une de l'UPIU RTT et de l'UPIU de réponse à l'interface hôte (211, 511) en tant que seconde classe de trafic ayant une priorité supérieure à la première classe de trafic.

8. Système de mémoire (1, 2, 110, 200, 410, 500) selon la revendication 7, dans lequel le contrôleur de mémoire (60, 111, 210, 411, 510) écrit des informations sur la première classe de trafic dans le paquet de données de lecture et écrit des informations sur la seconde classe de trafic dans l'UPIU RTT et/ou l'UPIU de réponse.
